# EUROPEAN PATENT APPLICATION

(11) **EP 4 806 751 A1**
(43) Date of publication of application: **16.09.2026**
(21) Application number: 23958403.0
(22) Date of filing: 10.11.2023
(51) Int. Cl.: B60W 60/00, B60W 30/02, B60W 40/08, B60W 40/02

(54) **PERSONAL TRAVEL CONTROL METHOD OF VEHICLE, PERSONAL TRAVEL SYSTEM, AND VEHICLE PROVIDING PERSONAL TRAVEL CONTROL SERVICE**

(71) Applicant: LG Electronics Inc., Yeongdeungpo-gu Seoul 07336 (KR)
(72) Inventor: SIM, Woojin, Seoul 06772 (KR); KIM, Minkyu, Seoul 06772 (KR); PARK, Youngkyung, Seoul 06772 (KR); ROH, Heejun, Seoul 06772 (KR)
(74) Representative: Vossius & Partner Patentanwälte Rechtsanwälte mbB
(86) International application number: PCT/KR2023/018057
(87) International publication number: WO 2025/100604

(57) **Abstract**

A personal travel control method of a vehicle of the present invention is disclosed as a step of recognizing information about objects around the vehicle and a travel situation on the basis of information related to a sensor of the vehicle and an external map while the vehicle is traveling. In addition, the personal travel control method comprises steps of: monitoring recognized information and the gaze and emotional state of a passenger with respect to the travel of the vehicle; and controlling at least one of the travel or route of the vehicle to reflect the emotional state of the passenger on the basis of the monitoring. In addition, the personal travel control method comprises a step of training a vehicle travel model on the basis of the results of the control reflecting the emotional state of the passenger. Accordingly, a driver or a passenger can experience more personalized ride comfort, and a personalized travel model can be managed using only driver/passenger information regardless of the vehicle.

## Description

### Technical Field

The present disclosure relates to a method of controlling personal driving of a vehicle and, more particularly, to a method of personal driving of a vehicle, a personal driving control system, and a personal driving control service, each of which reflects an emotional state of an occupant.

### Background Art

A vehicle is an apparatus that transports a user in a direction desired by the user. A typical example of a vehicle is an automobile.

A trend has emerged in which vehicles are equipped with various sensors, electronic devices, and equivalents thereof to improve user convenience. Particularly, to enhance user convenience, extensive research has been conducted on Advanced Driver Assistance Systems (ADAS). Furthermore, the development of autonomous vehicles has been actively conducted.

The term 'autonomous driving of a vehicle' refers to a system in which a vehicle is capable of determining driving behavior and operating without input from an occupant. This autonomous driving may be categorized into progressive stages ranging from non-automation to full automation, depending on the degree to which the system is involved in driving and the extent to which a driver controls a vehicle.

However, the use of the ADAS may assist a driver to drive a vehicle or may enable the vehicle to perform fully automated autonomous driving. However, the sense of detachment may occur because the individual state of the driver or an occupant is not reflected.

For example, when exposed to a situation in which a pedestrian continually appears on a road shoulder while the vehicle drives, the driver or the occupant may feel an increased sense of anxiety. Alternatively, for example, in some cases, a certain driver or occupant may feel continuously disgusted by a situation where another vehicle overtakes the vehicle. Alternatively, for example, even when the vehicle drives at a legally regulated speed, there may be cases where the driver or the occupant experiences a greater sense of fear.

In this regard, WO1999FR002571 (hereinafter referred to as 'Patent Document 1') discloses that changes in the shape of a driver's eyes or eyelids are detected to determine whether the driver is drowsy and, accordingly, a warning is provided about the careful driving or situation determination. However, 'Patent Document 1' has the limitation of providing only a warning regarding the state of the driver without engagement in driving control.

In addition, US 2022/0126863 (hereinafter referred to as 'Patent Document 2') discloses the technology for determining a vehicle driving mode through information obtained by a sensor of the vehicle and vehicle driving modes for ride comfort, arrival-time priority, and fuel efficiency priority.

However, Patent Document 2 is subject to limitations in reflecting individual differences of occupants. In addition, Patent Document 2 discloses that a vehicle drives in a predetermined driving mode in a matched driving situation. For this reason, it is difficult to perform personalized driving regarding a specific driving situation.

### Disclosure of Invention

### Technical Problem

The objects of the present disclosure are to address the above-mentioned problems and other related problems.

One object of an embodiment of the present disclosure is to provide a method of controlling personal driving of a vehicle, a personal driving system, and a personal driving control service that are capable of minimizing the sense of driving detachment that a driver or an occupant can feel during autonomous driving of the vehicle.

Another object of an embodiment of the present disclosure is to provide a method of controlling personal driving of a vehicle, a personal driving system, and a personal driving control service that are capable of adaptively controlling driving by reflecting an emotional state of a driver or an occupant during autonomous driving of the vehicle.

Still another object of an embodiment of the present disclosure is to provide a method of controlling personal driving of a vehicle, a personal driving system, and a personal driving control service that are capable of generating a personalized driving model by reflecting an emotional state of a driver or an occupant in the vehicle.

### Solution to Problem

To achieve the above-mentioned objects, a method of controlling personal driving of a vehicle according to an embodiment of the present disclosure is capable of adaptively adjusting vehicle driving or changing a vehicle path by reflecting an emotional state of a driver or occupant regarding information recognized while the vehicle drives.

In addition, a driving model is capable of being trained using the result of control, reflecting the emotional state of the driver or occupant regarding the recognized information, as selected input data. Accordingly, the driving model is manageable on a per-driver or per-occupant basis.

Specifically, the method of controlling personal driving of a vehicle according to an embodiment of the present disclosure may include the following steps. The method of controlling personal driving of a vehicle may include: recognizing information regarding an object in the vicinity of the vehicle and a driving situation on the basis of information obtained by a sensor of the vehicle and external map information while the vehicle drives; monitoring a gaze direction and an emotional state of an occupant regarding the recognized information and vehicle driving; and controlling at least one of the following: the vehicle driving or a driving path of the vehicle, based on the result of the monitoring in such a manner as to reflect the emotional state of the occupant. In addition, the method of controlling personal driving of a vehicle may further include training a vehicle driving model based on the result of the control, the result reflecting the emotional state of the occupant.

In addition, according to an embodiment, the monitoring may include collecting data related to the gaze direction and the emotional state of the occupant using at least one of the following: a DMS or an IMS, each of which is included in the vehicle; and determining, based on the collected data, whether the emotional state of the occupant regarding the recognized information and the vehicle driving indicates a stressful state.

In addition, according to an embodiment, the monitoring may further include: monitoring the emotional state based on data related to the gaze direction of the occupant when the recognized information is related to the object in the vicinity of the vehicle, and monitoring the emotional state based on data related to a change in facial temperature of the occupant and to a heart rate of the occupant when the recognized information is related to properties different from those of the object in the vicinity of the vehicle.

In addition, according to an embodiment, the monitoring may further include determining that the recognized information, matching the stressful state, includes complex information.

In addition, according to an embodiment, in the controlling, the vehicle driving or the driving path of the vehicle, each of which matches each piece of information in the complex information, may be controlled in the direction of alleviating the stressful state of the occupant.

In addition, according to an embodiment, in the controlling, the vehicle driving or the driving path of the vehicle, each of which matches one piece of information selected from the complex information, in a weighted manner, in the direction of alleviating the stressful state of the occupant.

In addition, according to an embodiment, the training of the driving model may include training the driving model in a manner that varies according to an attribute of the recognized information on the basis of the result of the control.

In addition, according to an embodiment, the training of the driving model may include generating first driving information, which is based on the recognized information, using a pre-trained driving model, generating second driving information related to the first driving information on the basis of the emotional state of the occupant regarding the first driving information, and training the driving mode on the basis of the second driving information.

In addition, according to an embodiment, the monitoring may include recognizing the presence of a different vehicle that travels in parallel with a travel lane of the vehicle and monitoring a stressful emotional state of the occupant regarding the recognized information, and the controlling may include: adjusting an offset to a travel road of the vehicle in the direction of moving away from the different vehicle while the different vehicle drives in parallel; and controlling the vehicle to travel by reverting the offset to the travel road of the vehicle to a previous state when it is recognized that the different vehicle no longer travels in parallel.

In addition, according to an embodiment, the monitoring may include: recognizing that the vehicle drives in a section that satisfies a first condition, and monitoring a stressful emotion of the occupant regarding the recognized information, and the controlling may include changing a travel path of the vehicle in such a manner that the vehicle drives to avoid the section that satisfies the first condition, or additionally adjusting at least one of the following: a travel distance or a travel speed, while the vehicle drives in the section that satisfies the first condition.

In addition, according to an embodiment, the monitoring may include monitoring a stressful emotion of the occupant while the vehicle drives along a steep road, and the controlling may include additionally decreasing a travel speed of the vehicle to correspond to the degree of the stressful emotion of the occupant.

In addition, according to an embodiment, the monitoring may include monitoring a stressful emotion of the occupant regarding an overtaking vehicle in front of the vehicle, and the controlling may control the vehicle to travel by resetting a distance between the vehicle and a preceding vehicle to be shorter in such a manner as to reflect the stressful emotion of the occupant.

In addition, a personal driving system for a vehicle according to an embodiment of the present disclosure may include an interface unit that receives sensing data obtained by a sensor of the vehicle and external map information, while the vehicle drives; a recognition unit that recognizes information regarding an object in the vicinity of the vehicle and a driving situation on the basis of the received sensing data and external map information; a determination unit, and a control unit. In the personal driving system, the determination unit may monitor a gaze direction and an emotional state of an occupant regarding the recognized information and vehicle driving, and may determine whether to change at least one of the following: the vehicle driving or a driving path of the vehicle, based on the result of the monitoring in such a manner as to reflect the emotional state of the occupant. In addition, the control unit may control at least one of the following: the vehicle driving or the driving path of the vehicle, according to the determination, and may control a driving model in such a manner that a driving model is trained based on the result of the control, the result reflecting the emotional state of the occupant.

In addition, a computer program recorded on a recording medium, the computer program installed on a computer apparatus, configured to include a memory, a transceiver, and a processor processing a command stored in the memory, causing the processor to perform the following operations. The operations may include recognizing information regarding an object in the vicinity of the vehicle and a driving situation on the basis of information obtained by a sensor of the vehicle and external map information while the vehicle drives; monitoring a gaze direction and an emotional state of an occupant regarding the recognized information and vehicle driving; controlling at least one of the following: vehicle driving or a driving path of the vehicle, in such a manner as to reflect the emotional state of the occupant based on the result of the monitoring; and training a driving model based on the result of the control reflecting the emotional state of the occupant.

### Advantageous Effects of Invention

The effects of the method of controlling personal driving of a vehicle according to the present disclosure, the personal driving system, and the computer program are described as follows.

According to at least one embodiment of the present disclosure, the sense of detachment during travel can be minimized by adjusting travel or a path to reflect an emotional state of a driver or occupant regarding the recognition of a driving situation during autonomous driving of the vehicle.

In addition, a driving model can be updated on the basis of the result of reflecting the emotional state of the driver or occupant regarding the recognition of the driving situation during autonomous driving of the vehicle, thereby enabling the driver or the occupant to experience more personalized travel comfort.

In addition, the driving model personalized on a per-driver or per-occupant basis can be managed, thereby enabling the driver or the occupant to experience personalized travel using only driver or occupant information, regardless of thea vehicle type.

### Brief Description of Drawings

FIG. 1 is a view illustrating a vehicle associated with an embodiment of the present disclosure.
FIG. 2 is a set of views illustrating the vehicle associated with the embodiment of the present disclosure when viewed from various angles.
FIGS. 3 and 4 are views each illustrating the interior of the vehicle associated with the embodiment of the present disclosure.
FIGS. 5 and 6 are views that are referenced to describe various objects related to vehicle travel associated with the embodiment of the present disclosure.
FIG. 7 is a block diagram that is referenced to describe the vehicle associated with the embodiment of the present disclosure and a personal driving system.
FIG. 8 is a block diagram that is referenced to describe a conceptual configuration of the personal driving system according to an embodiment of the present disclosure.
FIG. 9 is a representative flowchart that is referenced to describe a method of controlling personal driving of the vehicle associated with the embodiment of the present disclosure.
FIGS. 10A and 10B are views that are referenced to describe in detail the recognition of a stressful emotional state of an occupant and the reflection of the recognized stressful emotional state in driving control of the vehicle.
FIG. 11 is a flowchart that is referenced to describe a method of matching complex recognition information with the emotional state of the occupant according to an embodiment of the present disclosure.
FIGS. 12A, 12B, 13A, 13B, 13C, 14A, 14B, 15A, 15B, 16A, and 16B are views illustrating various embodiments, respectively, in which, in various driving situations, the vehicle travel or a vehicle path is controlled as feedback to the emotional state of the occupant.
FIG. 17 is a view illustrating a method of determining an occupant who is in an emotional state when the vehicle travel or the vehicle path is controlled in a case where a plurality of occupants are present in the vehicle, according to an embodiment of the present disclosure.

### Mode for the Invention

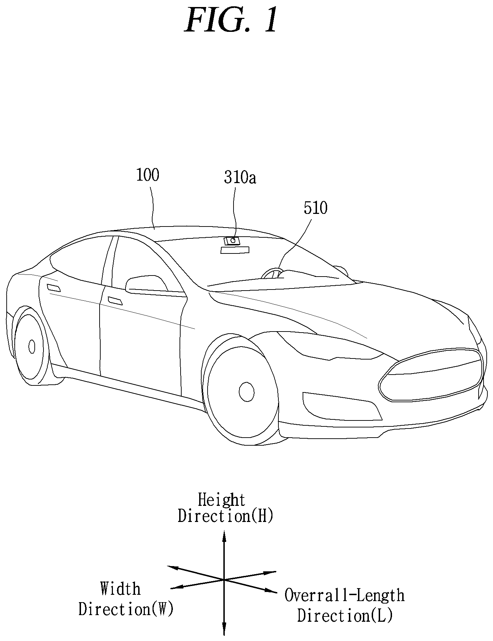

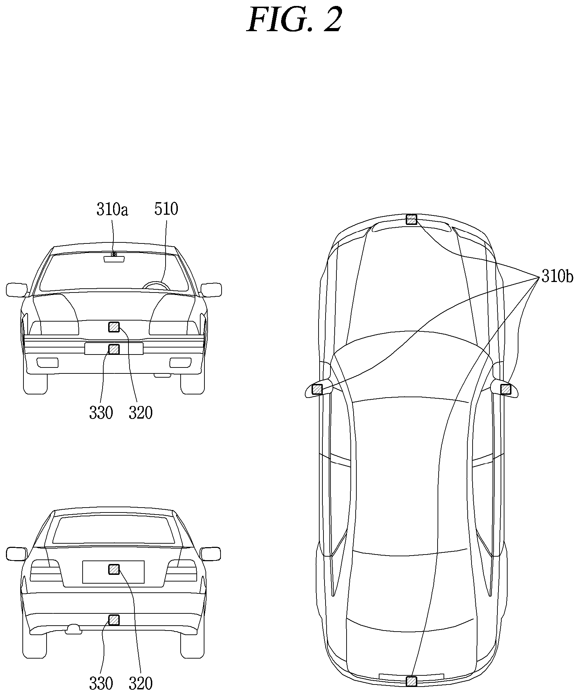

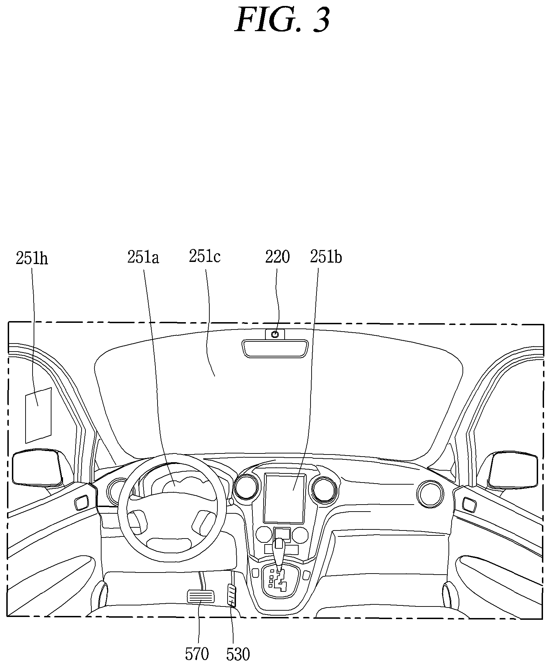

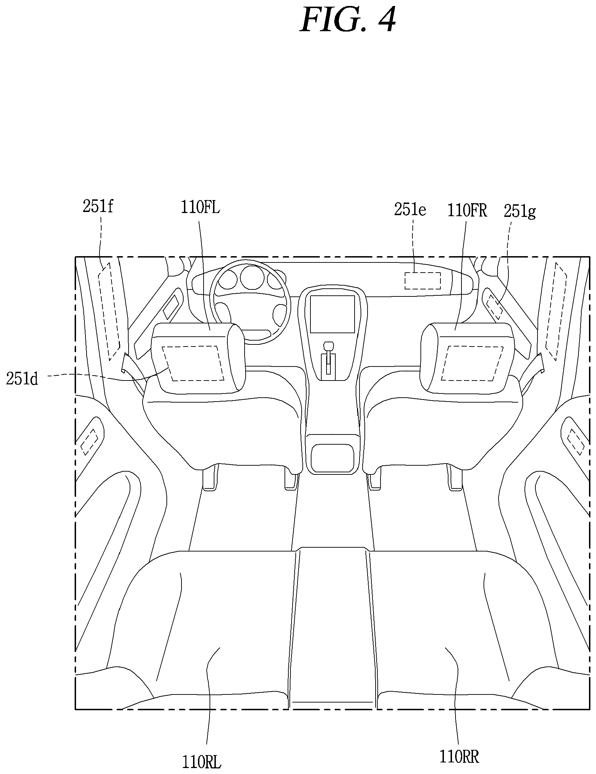

FIGS. 1 and 2 are views each illustrating the exterior of a vehicle associated with an embodiment of the present disclosure. FIGS. 3 and 4 are views each illustrating the interior of the vehicle associated with the embodiment of the present disclosure.

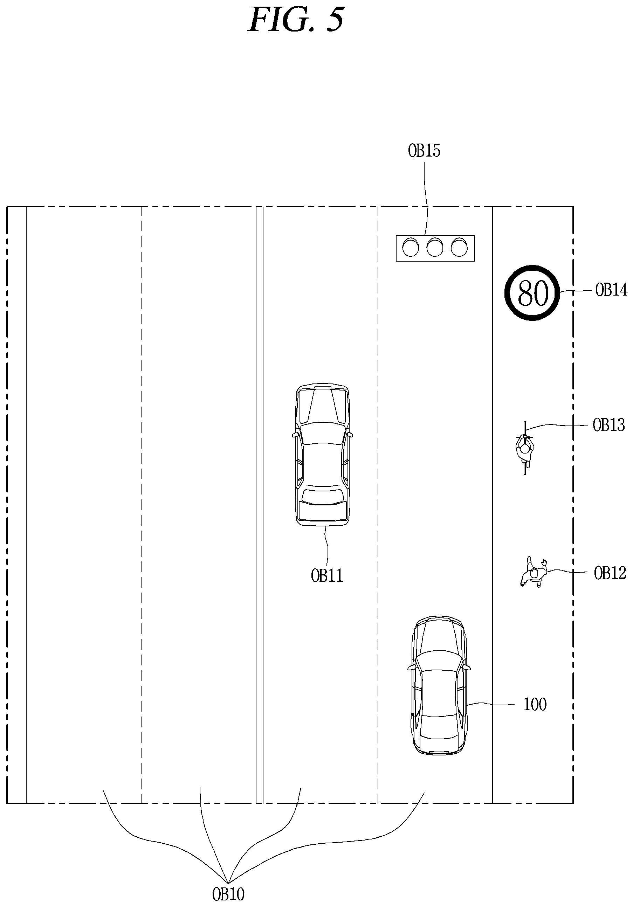

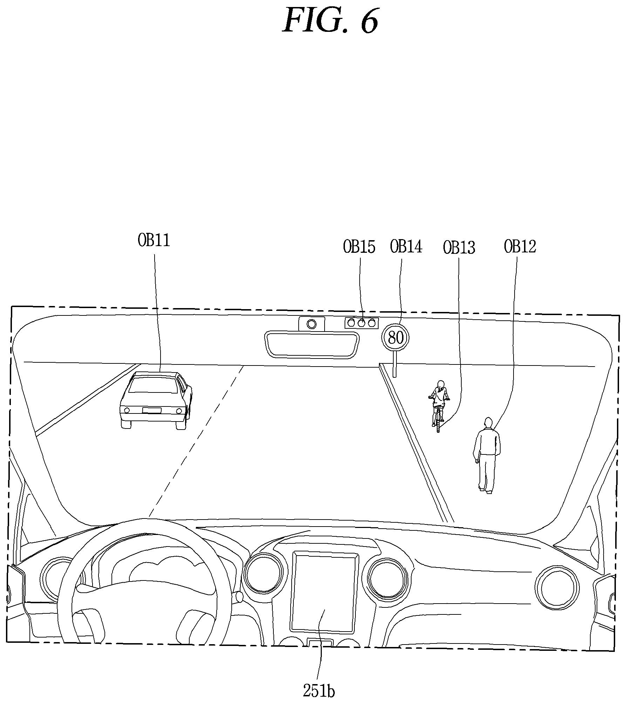

FIGS. 5 and 6 are views each illustrating various objects related to vehicle travel associated with the embodiment of the present disclosure.

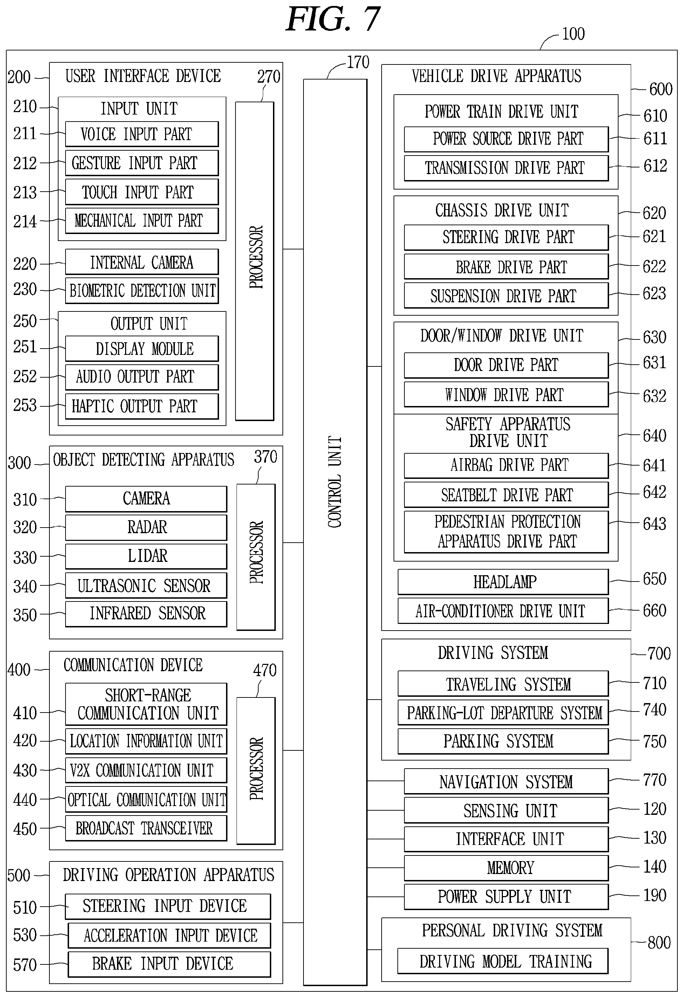

FIG. 7 is a block diagram that is referenced to describe the vehicle associated with the embodiment of the present disclosure. FIG. 7 is a block diagram that is referenced to describe the vehicle associated with the embodiment of the present disclosure.

With reference to FIGS. 1 to 7, a vehicle 100 may include wheels that rotate by a power source and a steering input apparatus 510 for adjusting the travel direction of the vehicle 100.

The vehicle 100 may be an autonomous driving vehicle. The vehicle 100 may switch to an autonomous driving mode or a manual mode in response to a user input. For example, the vehicle 100 may switch from the manual mode to the autonomous driving mode or from the autonomous driving mode to the manual mode in response to the user input received through a user interface device 200 (hereinafter referred to as a 'user terminal').

The vehicle 100 may switch to the autonomous driving mode or the manual mode on the basis of driving situation information. The driving situation information may be generated on the basis of object information provided by an object detection device 300. For example, the vehicle 100 may switch from the manual mode to the autonomous driving mode or from the autonomous driving mode to the manual mode on the basis of the driving situation information generated by the object detection device 300. For example, the vehicle 100 may switch from the manual mode to the autonomous driving mode or from the autonomous driving mode to the manual mode on the basis of the driving situation information received through a communication device 400.

The vehicle 100 may switch from the manual mode to the autonomous driving mode or from the autonomous driving mode to the manual mode on the basis of information, data, or signals, each of which is provided by an external device.

In a case where the vehicle 100, which is an autonomous driving vehicle, may be driven in the autonomous driving mode, the vehicle 100 may be driven through the use of an operational system 700. For example, the vehicle 100, which is an autonomous driving vehicle, may be driven on the basis of information, data, or signals, each of which is generated by a driving system 710, a parking-lot departure system 740, or a parking system 750.

In a case where the vehicle 100, which is an autonomous driving vehicle, is driven in the manual mode, the vehicle 100 may receive a user input for driving through a driving operation apparatus 500. The vehicle 100 may be driven in response to the user input received through the driving operation apparatus 500.

The overall length refers to the length from the front end to the rear end of the vehicle 100, the width refers to the width of the vehicle 100, and the height refers to the length from the bottom of the wheel to the roof. In the following description, an overall-length direction L may refer to a direction which serves as a reference for measuring the overall length of the vehicle 100, a width direction W may refer to a direction that serves as a reference for measuring the width of the vehicle 100, and a height direction H may refer to a direction that serves as a reference for measuring the height of the vehicle 100.

As illustrated in FIG. 7, the vehicle 100 may include the user interface device (hereinafter referred to as the "user terminal") 200, the object detection device 300, the communication device 400, the driving operation apparatus 500, a vehicle drive apparatus 600, the operational system 700, a navigation system 770, a sensing unit 120, a vehicular interface unit 130, a memory 140, a control unit 170 and a power supply unit 190.

According to an embodiment, the vehicle 100 may further include one or more constituent elements in addition to the constituent elements described in the present specification or may omit one or more of the described constituent elements.

The user interface device 200 is a device for communication between the vehicle 100 and a user. The user interface device 200 may receive the user input and may provide information, generated by the vehicle 100, to the user. The vehicle 100 may provide a user interface (UI) or user experience (UX) through the user interface device (hereinafter referred to as the 'user terminal') 200.

The user interface device 200 may include an input unit 210, an internal camera 220, a biometric detection unit 230, an output unit 250, and a processor 270. According to an embodiment, the user interface device 200 may further include one or more constituent elements in addition to the constituent elements described in the present specification or may omit one or more of the described constituent elements.

The input unit 210 serves to receive information as input from the user. The processor 270 may analyze data collected through the input unit 210 and may convert the data into a control command of the user.

The input unit 210 may be arranged within the vehicle 100. For example, the input unit 210 may be arranged in a region of the steering wheel, a region of the instrument panel, a region of the seat, a region of each pillar, a region of the door, a region of the center console, a region of the headlining, a region of the sun visor, a region of the windshield, a region of the window, or a region of a similar location.

The input unit 210 may include a voice input part 211, a gesture input part 212, a touch input part 213, and a mechanical input part 214.

The voice input part 211 may convert a user's voice input into an electrical signal. The electrical signal, resulting from the conversion, may be provided to the processor 270 or the control unit 170. The voice input part 211 may include one or more microphones.

The gesture input part 212 may convert a user's gesture input into an electrical signal. The electrical signal, resulting from the conversion, may be provided to the processor 270 or the control unit 170.

The gesture input part 212 may include at least one of the following: an infrared sensor or an image sensor, each of which serves to detect the user's gesture input. According to an embodiment, the gesture input part 212 may detect a user's three-dimensional (3D) gesture input. To this end, the gesture input part 212 may include a plurality of light-emitting units, each emitting an infrared ray, or a plurality of image sensors.

The gesture input part 212 may detect the user's 3D gesture input through a time-of-flight (TOF) technique, a structured light technique, or a disparity technique.

The touch input part 213 may convert the user's touch input into an electrical signal. The electrical signal, resulting from the conversion, may be provided to the processor 270 or the control unit 170.

The touch input part 213 may include a touch sensor for detecting the user's touch input. According to an embodiment, the touch input part 213 may be integrally formed with a display part 251, thereby forming a touch screen. The touch screen may provide both an input interface and an output interface between the vehicle 100 and the user.

The mechanical input part 214 may include at least one of the following: a button, a dome switch, a jog wheel, or a jog switch. An electrical signal generated by the mechanical input part 214 may be provided to the processor 270 or the control unit 170. The mechanical input part 214 may be arranged on the steering wheel, the center fascia, the center console, the cockpit module, the door, or an equivalent thereof.

The internal camera 220 may acquire an image of the interior of the vehicle 100. The processor 270 may detect the user's state on the basis of the image of the interior of the vehicle 100. The processor 270 may acquire the user's gaze information from the image of the interior of the vehicle 100. The processor 270 may detect the user's gesture from the image of the interior of the vehicle 100.

The biometric detection unit 230 may acquire the user's biometric information. The biometric detection unit 230 may include a sensor for acquiring the user's biometric information and may acquire the user's fingerprint information, heart rate information, and equivalents thereof using the sensor. The biometric information may be used for user authentication.

The output unit 250 may generate outputs associated with a visual sense, an auditory sense, a haptic sense, and the like. The output unit 250 may include at least one of the following: the display part 251, an audio output part 252, or a haptic output part 253.

The display part 251 may display graphic objects that correspond to various pieces of information, respectively. The display part 251 may include at least one of the following: a liquid crystal display (LCD), a thin-film transistor-LCD (TFT LCD), an organic light-emitting diode (OLED), a flexible display, a three-dimensional (3D) display, or an E-Ink display.

The display part 251 may be configured to have a layered structure or an integrated structure with the touch input part 213, thereby forming a touch screen.

The display part 251 may be configured as a head-up display (HUD). In a case where the display part 251 may be configured as the HUD, the display part 251 may be equipped with a projection module and thus may output information through an image that is projected onto the window shield or the window.

The display part 251 may be a transparent display. The transparent display may be attached to the windshield or the window. The transparent display may have a predetermined degree of transparency and may display a predetermined screen thereon. To exhibit a degree of transparency, the transparent display may include at least one of the following: a thin-film electroluminescent (TFEL), a transparent organic light-emitting diode (OLED), a transparent liquid crystal display (LCD), a transmissive transparent display, or a transparent light-emitting diode (LED) display. The transparent display may have an adjustable level of transparency.

The user interface device 200 may include a plurality of display parts, for example, display parts 251a to 251g.

The display part 251 may be arranged in a region of the steering wheel, a region 521a, 251b, or 251e of the instrument panel, a region 251d of the seat, a region 251f of each pillar, a region 251g of the door, a region of the center console, a region of the headlining, or a region of the sun visor, or may be formed in a region 251c of the windshield or a region of the window.

The audio output part 252 converts an electrical signal, provided from the processor 270 or the control unit 170, into an audio signal and outputs the audio signal. To this end, the audio output part 252 may include at least one speaker.

The haptic output part 253 generates a tactile output. For example, the haptic output part 253 may operate to vibrate a steering wheel, a safety belt, and seats 110FL, 110FR, 110RL, and 110RR, thereby enabling the user to perceive a vibration output.

The processor (hereinafter referred to as a 'control unit') 270 may control the overall operation of each unit of the user interface device 200. According to an embodiment, the user interface device 200 may include a plurality of processors 270 or may be configured without including the processor 270.

In a case where the processor 270 is not included in the user interface device 200, the user interface device 200 may operate under the control of a processor of another apparatus within the vehicle 100 or under the control of the control unit 170.

The user interface device 200 may be referred to as a vehicular display device. The user interface device 200 may operate under the control of the control unit 170.

The object detection device 300 is a device for detecting an object located outside the vehicle 100. This object may be an external entity associated with the operation of the vehicle 100. With reference to FIGS. 5 and 6, examples of an object O may include a lane OB10, a different vehicle OB11, a pedestrian OB12, a two-wheeled vehicle OB13, traffic signals OB14 and OB15, ambient light, a road, a structure, a speed bump, a terrain feature, an animal, and the like.

The lane OB10 may be a travel lane, a lane adjacent to the travel lane, or a lane along which a different vehicle in the opposite direction travels. The lane OB10 may be conceptually represented as including the left and right boundary lines that form the lane.

The different vehicle OB11 may be a vehicle that travels in the vicinity of the vehicle 100. The different vehicle OB11 may be a vehicle located within a predetermined distance from the vehicle 100. For example, the different vehicle OB11 may be a vehicle that travels ahead of or behind the vehicle 100.

The pedestrian OB12 may be a person located in the vicinity of the vehicle 100. The pedestrian OB12 may be a person located within a predetermined distance from the vehicle 100. For example, the pedestrian OB12 may be a person located on a sidewalk or roadway.

The two-wheeled vehicle OB12 may be a person-carrying vehicle that is located in the vicinity of the vehicle 100 and moves on two wheels. The two-wheeled vehicle OB12 may be a person-carrying vehicle that is located within a predetermined distance from the vehicle 100 and has two wheels. For example, the two-wheeled vehicle OB13 may be a motorcycle or a bicycle that is located on a sidewalk or roadway.

Examples of the traffic signal may include the traffic sign OB14, the traffic light OB15, or a pattern or text drawn on a road surface.

The light may be light generated from a lamp provided on a different vehicle. The light may be light generated from a street lamp. The light may be sunlight.

The road may include a road surface, a curved section, an upward slope, a downward slope, and the like.

The structure may be an object that is located in the vicinity of a road and fixed to the ground. Examples of the structure may include a street lamp, a roadside tree, a building, an electric pole, a traffic light, and a bridge.

Examples of the terrain feature may include a mountain, a hill, and the like.

The objects may be classified into movable objects and stationary objects. Examples of the movable objects may be conceptually represented as including another vehicle and a pedestrian. Examples of the stationary objects may be conceptually represented as including a traffic light, a road, and a structure.

The object detection device 300 may include a camera 310, a radar 320, a LiDAR 330, an ultrasonic sensor 340, an infrared sensor 350, and a processor 370.

According to an embodiment, the object detection device 300 may further include one or more constituent elements in addition to the constituent elements described in the present specification or may omit one or more of the described constituent elements.

The camera 310 may be located on an appropriate portion of the exterior of the vehicle to capture an image of the surroundings of the vehicle 100. The camera 310 may be a monocular camera, a stereo camera 310a, an around-view monitoring (AVM) camera 310b, or a 360-degree camera.

For example, the camera 310 may be arranged adjacent to a front windshield within the vehicle to acquire an image of the surroundings in front of the vehicle. Alternatively, the camera 310 may be arranged in the vicinity of the front bumper or the radiator grill.

For example, the camera 310 may be arranged adjacent to a rear glass pane within the vehicle to capture the image of the surroundings behind the vehicle. Alternatively, the camera 310 may be arranged adjacent to the rear bumper, the trunk, or the tailgate.

For example, the camera 310 may be arranged adjacent to at least one of the side windows within the vehicle to capture an image of the surroundings alongside the vehicle. Alternatively, the camera 310 may be arranged in the vicinity of the side mirror, the fender, or the door.

The camera 310 may provide an acquired image to the processor 370.

The radar 320 may include an electromagnetic wave transmission unit and an electromagnetic wave reception unit. The radar 320 may be configured based on a pulse radar method or a continuous wave radar method, in accordance with the principle of emitting a radio wave. The radar 320 may be configured based on a Frequency Modulated Continuous Wave (FMCW) method or a Frequency Shift Keying (FSK) method, each of which is determined according to a signal waveform, among continuous wave radar methods.

The radar 320 may detect an object based on a time-of-flight (TOF) technique or a phase-shift technique through the use of electromagnetic waves and may determine the location of the detected object, the distance to the detected object, and the relative speed with respect to the detected object.

The radar 320 may be arranged at an appropriate position on the exterior of the vehicle 100 to detect an object that is located in front of, behind, or alongside the vehicle 100.

The LiDAR 330 may include a laser transmission unit and a laser reception unit. The LiDAR 330 may be configured based on the time-of-flight (TOF) technique or the phase-shift technique.

The LiDAR 330 may be configured as a drive-type or non-drive-type LiDAR.

In a case where the LiDAR 330 may be configured as a drive-type LiDAR, the LiDAR 330 may be rotated by a motor and may detect an object in the vicinity of the vehicle 100.

In a case where the LiDAR 330 may be configured as a non-drive-type LiDAR, the LiDAR 330 may detect, through optical, an object located within a predetermined range of the vehicle 100. The vehicle 100 may include a plurality of non-drive-type LiDAR's 330.

The LiDAR 330 may detect an object based on the time-of-flight (TOF) technique or the phase-shift technique through the use of laser light and may determine the location of the detected object, the distance to the detected object, and the relative speed with respect to the detected object.

The radar 330 may be arranged at an appropriate position on the exterior of the vehicle 100 to detect an object that is located in front of, behind, or alongside the vehicle 100.

The ultrasonic sensor 340 may include an ultrasonic wave transmission unit and an ultrasonic wave reception unit. The ultrasonic sensor 340 may detect an object through the use of ultrasonic waves and may determine the location of the detected object, the distance to the detected object, and the relative speed with respect to the detected object.

The ultrasonic sensor 340 may be arranged at an appropriate position on the exterior of the vehicle 100 to detect an object located in front of, behind, or alongside the vehicle 100.

The infrared sensor 350 may include an infrared light transmission unit and an infrared light reception unit. The infrared sensor 340 may detect an object through the use of infrared light and may determine the location of the detected object, the distance to the detected object, and the relative speed with respect to the detected object.

The infrared sensor 350 may be arranged at an appropriate position on the exterior of the vehicle 100 to detect an object located in front of, behind, or alongside the vehicle 100.

The processor 370 may control the overall operation of each unit of the object detection device 300.

The processor 370 may detect and track an object on the basis of an acquired image. The processor 370 may perform operations, such as calculation of the distance to the object and calculation of the relative speed with respect to the object, through the use of an image processing algorithm.

The processor 370 may detect and track an object through the use of reflected electromagnetic waves, resulting from the reflection of emitted electromagnetic waves by the object. The processor 370 may perform operations, such as calculation of the distance to the object and calculation of the relative speed with respect to the object, through the use of electromagnetic waves.

The processor 370 may detect and track an object through the use of reflected laser beams, resulting from the reflection of emitted lasers by the object. The processor 370 may perform operations, such as calculation of the distance to the object and calculation of the relative speed with respect to the object, through the use of laser beams.

The processor 370 may detect and track an object through the use of reflected ultrasonic waves, resulting from the reflection of emitted ultrasonic waves by the object. The processor 370 may perform operations, such as calculation of the distance to the object and calculation of the relative speed with respect to the object, through the use of ultrasonic waves.

The processor 370 may detect and track an object through the use of reflected infrared light, resulting from the reflection of emitted infrared light by the object. The processor 370 may perform operations, such as calculation of the distance to the object and calculation of the relative speed with respect to the object, through the use of infrared light.

According to an embodiment, the object detection device 300 may include a plurality of processors 370 or may be configured without including the processor 370. The camera 310, the radar 320, the LiDAR 330, the ultrasonic sensor 340, and the infrared sensor 350 may include respective processors for individual operation.

In a case where the processor 370 is not included in the object detection device 300, the object detection device 300 may operate under the control of a processor of an apparatus within the vehicle 100 or under the control of the control unit 170.

The object detection device 300 may operate under the control of the control unit 170.

The communication device 400 is a device for performing communication with an external device. The external device here may be another vehicle, a mobile terminal, or a server.

To perform communication, the communication device 400 may include a transmission antenna, a reception antenna, and at least one of the following: a radio frequency (RF) circuit or an RF device, each of which is capable of implementing various communication protocols.

The communication device 400 may include a short-range communication unit 410, a location information unit 420, a V2X communication unit 430, an optical communication unit 440, a broadcast transceiver 450, and a processor 470.

According to an embodiment, the communication device 400 may further include one or more constituent elements in addition to the constituent elements in the present specification or may omit one or more of the described constituent elements.

The short-range communication unit 410 is a unit for short-range communication. The short-range communication unit 410 may support short-range communication using at least one of the following technologies: Bluetooth^{™}, Radio Frequency IDentification (RFID), Infrared Data Association (IrDA), Ultra-Wide Band (UWB), Zig Bee, Near Field Communication (NFC), Wireless-Fidelity (Wi-Fi), Wi-Fi Direct, or Wireless Universal Serial Bus (USB).

The short-range communication unit 410 may form short-range wireless area networks and may perform short-range communication between the vehicle 100 and at least one external device.

The location information unit 420 is a unit for acquiring location information of the vehicle 100. For example, the location information unit 420 may include a Global Positioning System (GPS) module or a Differential Global Positioning System (DGPS) module.

The V2X communication unit 430 is a unit for performing wireless communication with a server (Vehicle to Infrastructure (V2I)), with another vehicle (Vehicle to Vehicle (V2V)), or with a pedestrian (Vehicle to Pedestrian (V2P)). The V2X communication unit 430 may include an RF circuit capable of implementing protocols for communication with an infrastructure (V2I), communication between vehicles (V2V), and communication with a pedestrian (V2P).

The optical communication unit 440 is a unit for performing communication with an external device through the use of light. The optical communication unit 440 may include an optical transmission part for converting an electrical signal into an optical signal and transmitting the optical signal to the outside, and an optical reception part for converting a received optical signal into an electrical signal.

According to an embodiment, the optical transmission part may be integrally formed with a lamp included in the vehicle 100.

The broadcast transceiver 450 is a unit for receiving a broadcast signal from an external broadcast management server or transmitting a broadcast signal to the broadcast management server over a broadcast channel. The broadcast channels may include a satellite channel and a terrestrial channel. The broadcast signals may include a TV broadcast signal, a radio broadcast signal, and a data broadcast signal.

The processor 470 may control the overall operation of each unit of the communication device 400.

According to an embodiment, the communication device 400 may include a plurality of processors 470 or may be configured without including the processor 470.

In a case where the processor 470 is not included in the communication device 400, the communication device 400 may operate under the control of a processor of another apparatus within the vehicle 100 or under the control of the control unit 170.

The communication device 400, together with the user interface device 200, may constitute a vehicular display device. In this case, the vehicular display device may be referred to as a telematics device or an Audio Video Navigation (AVN) device.

The communication device 400 may operate under the control of the control unit 170.

The driving operation apparatus 500 is an apparatus that receives a user input for driving.

In the manual mode, the vehicle 100 may be driven on the basis of a signal provided by the driving operation apparatus 500.

The driving operation apparatus 500 may include the steering input device 510, an acceleration input device 530, and a brake input device 570.

The steering input device 510 may receive an input regarding the travel direction of the vehicle 100 from the user. The steering input device 510 is preferably formed in the form of a wheel, thereby enabling a steering input through the rotation of the wheel. According to an embodiment, the steering input device may also be formed in the shape of a touch screen, a touchpad, or a button.

The acceleration input device 530 may receive, from the user, an input for accelerating the vehicle 100. The brake input device 570 may receive, from the user, an input for decelerating the vehicle 100. The acceleration input device 530 and the brake input device 570 are preferably formed in the shape of a pedal. According to an embodiment, the acceleration input device or the brake input device may also be formed in the shape of a touch screen, a touchpad, or a button.

The driving operation apparatus 500 may operate under the control of the control unit 170.

The vehicle drive apparatus 600 is an apparatus that electrically controls the operations of various apparatuses within the vehicle 100.

The vehicle drive apparatus 600 may include a power train drive unit 610, a chassis drive unit 620, a door/window drive unit 630, a safety apparatus drive unit 640, a lamp drive unit 650, and an air-conditioner drive unit 660.

According to an embodiment, the vehicle drive apparatus 600 may further include one or more constituent elements in addition to the constituent elements described in the present specification or may omit one or more of the described constituent elements.

The vehicle drive apparatus 600 may include a processor. Units of the vehicle drive apparatus 600 may include respective processors for individual operation.

The power train drive unit 610 may control the operation of a power train apparatus.

The power train drive unit 610 may include a power source drive part 611 and a transmission drive part 612.

The power source drive part 611 may execute control of a power source of the vehicle 100.

For example, in a case where the power source of the vehicle is a fossil-fuel-based engine, the power source drive part 610 may execute electronic control of the engine. Accordingly, output torque and other parameters of the engine may be controlled. The power source drive part 611 may adjust the engine output torque under the control of the control unit 170.

For example, in a case where the power source of the vehicle is an electric-energy-based motor, the power source drive part 610 may execute control of the motor. The power source drive part 610 may adjust the rotational speed, torque, and other parameters of the motor under the control of the control unit 170.

The transmission drive part 612 may execute control of the transmission. The transmission drive gearbox part 612 may adjust the state of the transmission. The transmission drive part 612 may change the state of the transmission to Drive (D), Reverse (R), Neutral (N), or Park (P).

In a case where the power source of the vehicle is an engine, the transmission drive part 612 may adjust the engaged state of a gear in Drive (D).

The chassis drive unit 620 may control the operation of a chassis apparatus. The chassis drive unit 620 may include a steering drive part 621, a brake drive part 622, and a suspension drive part 623.

The steering drive part 621 may execute electronic control of a steering apparatus within the vehicle 100. The steering drive part 621 may change the travel direction of the vehicle.

The brake drive part 622 may execute electronic control of a brake apparatus within the vehicle 100. For example, the brake drive part 622 may reduce the speed of the vehicle 100 by controlling the operation of the brakes provided on the wheels.

The brake drive part 622 may individually control each of the plurality of brakes. The brake drive part 622 may control the application of varying braking forces to the plurality of wheels.

The suspension drive part 623 may execute electronic control of a suspension apparatus within the vehicle 100. For example, in a case where a road surface is uneven, the suspension drive part 623 may reduce vibration of the vehicle 100 by controlling the suspension apparatus. The suspension drive part 623 may control each of the plurality of suspensions individually.

The door/window drive unit 630 may execute electronic control of a door apparatus or a window apparatus within the vehicle 100.

The door/window drive unit 630 may include a door drive part 631 and a window drive part 632.

The door drive part 631 may execute control of the door apparatus. The door drive part 631 may control the opening or closing of a plurality of doors included in the vehicle 100. The door drive part 631 may control the opening or closing of the trunk or the tailgate. The door drive part 631 may control the opening or closing of the sunroof.

The window drive part 632 may execute electronic control of the window apparatus. The window drive part 632 may control the opening or closing of a plurality of windows included in the vehicle 100.

The safety apparatus drive unit 640 may execute electronic control of various safety apparatuses within the vehicle 100.

The safety apparatus drive unit 640 may include an airbag drive part 641, a seat belt drive part 642, and a pedestrian protection apparatus drive part 643.

The airbag drive part 641 may execute electronic control of an airbag apparatus within the vehicle 100. For example, when a risk is detected, the airbag drive part 641 may control an airbag in such a manner that the airbag is deployed.

The seat belt drive part 642 may execute electronic control of a seat belt apparatus within the vehicle 100. For example, when a risk is detected, the seat belt drive part 642 may secure occupants seated in seats 110FL, 110FR, 110RL, and 110RR by tightening respective seat belts.

The pedestrian protection apparatus drive part 643 may execute electronic control of the hood lift and the pedestrian airbag. For example, when a collision with a pedestrian is detected, the pedestrian protection apparatus drive part 643 may control the hood and the pedestrian airbag in such a manner that the hood is lifted up and that the pedestrian airbag is deployed.

The lamp drive part 650 may execute electronic control of various lamp apparatuses within the vehicle 100.

The air-conditioner drive unit 660 may execute electronic control of an air conditioner within the vehicle 100. For example, when the temperature within the vehicle 100 is high, the air-conditioner drive unit 660 may control the air conditioner to operate in such a manner as to supply cool air into the vehicle 100.

The vehicle drive apparatus 600 may include a processor. Units of the vehicle drive apparatus 600 may include respective processors for individual operation.

The vehicle drive apparatus 600 may operate under the control of the control unit 170.

The operational system 700 is a system that controls various driving functions of the vehicle 100. The operational system 700 may operate in the autonomous driving mode.

The operational system 700 may include the driving system 710, the parking-lot departure system 740, and the parking system 750.

According to an embodiment, the operational system 700 may further include one or more constituent elements in addition to the constituent elements described in the present disclosure or may omit one or more of the described constituent elements.

The operational system 700 may include a processor. Units of the operational system 700 may include respective processors for individual operation.

According to an embodiment, in a case where the operational system 700 may be implemented in software, the operational system 700 may also conceptually operate at a lower level than the control unit 170.

According to an embodiment, the operational system 700 may conceptually include at least one of the following: the user interface device 200, the object detection device 300, the communication device 400, the vehicle drive apparatus 600, or the control unit 170.

The driving system 710 may enable the vehicle 100 to travel.

The driving system 710 may receive navigation information from the navigation system 770, may provide a control signal to the vehicle drive apparatus 600, and may enable the vehicle 100 to travel. The driving system 710 may receive object information from the object detection device 300, may provide a control signal to the vehicle drive apparatus 600, and may enable the vehicle 100 to travel. The driving system 710 may receive a signal from an external device through the communication device 400, may provide a control signal to the vehicle drive apparatus 600, and may enable the vehicle 100 to travel.

The parking-lot departure system 740 may perform a maneuver to guide the vehicle 100 out of a parking lot.

The parking-lot departure system 740 may receive the navigation information from the navigation system 770, may provide a control signal to the vehicle drive apparatus 600, and may perform a maneuver to guide the vehicle 100 out of the parking lot. The parking-lot departure system 740 may receive object information from the object detection device 300, may provide a control signal to the vehicle drive apparatus 600, and may perform a maneuver to guide the vehicle 100 out of the parking lot. The parking-lot departure system 740 may receive a signal from an external device through the communication device 400, may provide a control signal to the vehicle drive apparatus 600, and may perform a maneuver to guide the vehicle 100 out of the parking lot.

The parking system 750 may perform a maneuver to park the vehicle 100.

The parking system 750 may receive the navigation information from the navigation system 770, may provide a control signal to the vehicle drive apparatus 600, and may perform a maneuver to park the vehicle 100. The parking system 750 may receive object information from the object detection device 300, may provide a control signal to the vehicle drive apparatus 600, and may perform a maneuver to park the vehicle 100. The parking system 750 may receive a signal from an external device through the communication device 400, may provide a control signal to the vehicle drive apparatus 600, and may perform a maneuver to park the vehicle 100.

The navigation system 770 may provide the navigation information. The navigation information may include at least one of the following: map information, information regarding a preset destination, path information based on the preset destination, information about various objects on a path, lane information, or current vehicular location information.

The navigation system 770 may include a memory and a processor. The navigation information may be stored in the memory. The processor may control the operation of the navigation system 770.

According to an embodiment, the navigation system 770 may update previously stored information by receiving information from an external device through the communication device 400.

According to an embodiment, the navigation system 770 may also be classified as a sub-constituent element of the user interface device 200.

The sensing unit 120 may sense the state of the vehicle. The sensing unit 120 may include a posture sensor (e.g., a yaw sensor, a roll sensor, or a pitch sensor), a collision sensor, a wheel sensor, a speed sensor, a tilt sensor, a weight-detection sensor, a heading sensor, a yaw sensor, a gyro sensor, a position module, a vehicle forward/backward movement sensor, a battery sensor, a fuel sensor, a tire sensor, a steering sensor sensing the turning of a steering wheel, an in-vehicle temperature sensor, an in-vehicle humidity sensor, an ultrasonic sensor, an illumination sensor, an accelerator position sensor, a brake pedal position sensor, and other sensors.

The sensing unit 120 may acquire vehicular posture information, vehicular collision information, vehicular direction information, vehicular location information (GPS information), vehicular angle information, vehicular speed information, vehicular acceleration information, vehicular tilt information, vehicular forward/backward movement information, battery information, fuel information, tire information, vehicular lamp information, in-vehicle temperature information, and in-vehicle humidity information. Furthermore, the sensing unit 120 may acquire signals that result from sensing a steering wheel rotation angle, vehicle exterior illumination, pressure applied to an acceleration pedal, pressure applied to a brake pedal, and equivalents thereof.

The sensing unit 120 may further include an acceleration pedal sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and other sensors.

The vehicular interface unit 130 may serve as an interface for various types of external devices connected to the vehicle 100. For example, the vehicular interface unit 130 may include a port that enables a connection to a mobile terminal and may be connected to the mobile terminal through the port. In this case, the vehicular interface unit 130 may exchange data with the mobile terminal.

The vehicular interface unit 130 may serve as an interface for supplying electrical energy to the connected mobile terminal. In a case where the mobile terminal is electrically connected to the vehicular interface unit 130, the vehicular interface unit 130 may supply electrical energy, supplied from the power supply unit 190, to the mobile terminal under the control of the control unit 170.

The memory 140 is electrically connected to the control unit 170. Basic data for the units, control data for controlling operations of the units, and input and output data may be stored in the memory 140. Examples of the memory 140 may include various hardware storage devices, such as ROM, RAM, EPROM, flash memory, and a hard disk drive. Programs and equivalents thereof for processing or control by the control unit 170 and various data for the overall operation of the vehicle 100 may be stored in the memory 140.

According to an embodiment, the memory 140 may be integrally formed with the control unit 170 or may be configured as a sub-constituent element of the control unit 170.

The control unit 170 may control the overall operation of each unit within the vehicle 100. The control unit 170 may be referred to as an Electronic Control Unit (ECU).

The power supply unit 190 may supply power necessary for the operation of each constituent element under the control of the control unit 170. Specifically, the power supply unit 190 may be supplied with power from the battery within the vehicle 100 or from other sources.

At least one processor and at least one control unit 170, each of which is included in the vehicle 100, may be configured based on at least one of the following: application-specific integrated circuits (ASICs), digital signal processors (DSPs), digital signal processing devices (DSPDs), programmable logic devices (PLDs), field-programmable gate arrays (FPGAs), processors, controllers, microcontrollers, microprocessors, or electric units performing a similar function.

In embodiments of the present disclosure, the terms 'driver,' 'occupant,' and 'driver or occupant (driver/occupant)' mean a driver, a passenger, a fellow passenger, an occupant, and the like who are capable of personal driving control according to an embodiment of the present disclosure.

In addition, in the embodiments of the present disclosure, the term "vehicle" is used to refer to a vehicle capable of autonomous driving by means of artificial intelligence (AI) or to a vehicle configured to receive autonomous driving functionality as a service.

In addition, in the embodiments of the present disclosure, the term "personal driving system' is used to refer to a system that operates in conjunction with a separate system, apparatus, or server that includes an Advanced Driver Assistance System (ADAS), an Autonomous Driving System (ADS), and/or a Full Self Driving (FSD), each of which is included in the vehicle, or that provide these services.

As illustrated in FIG. 7, a personal driving system 800 according to an embodiment of the present disclosure may be provided within the vehicle 100.

The personal driving system 800 may operate to adjust the vehicle travel or a vehicle path by reflecting an emotional state of an occupant who is monitored while the vehicle 100 performs autonomous driving. In addition, the personal driving system 800 operates to train or update a driving model of the vehicle 100 on the basis of the result of control, the result reflecting an emotional state of the occupant.

According to an embodiment, the personal driving system 800 may be any one of the following: the ADAS system, the ADS system, or the FSD system, or may be a constituent element included in one of these systems.

The personal driving system 800 may include a pre-trained driving model or operate to execute driving model training in conjunction with the pre-trained driving model.

In this context, the pre-trained driving model may be a driving model trained for autonomous driving technology through artificial intelligence machine learning, reinforcement learning (e.g. Deep Dense Reinforcement Learning (D2RL) employing a deep learning technique, reinforcement learning employing a simulator, and the like), end-to-end learning, and so forth. However, the pre-trained driving model may be trained using learning methods other than the aforementioned learning methods.

Data used for the Al machine learning, which are intended to be used for autonomous driving of the vehicle 100, may include sensor values collected by various types of sensor installed within the vehicle 100. For example, the data used for the Al machine learning, which are intended to be used for the autonomous driving of the vehicle, may include sensor values collected by the camera, the radar, the LiDAR, the ultrasonic sensor, and the like, each of which is installed within the vehicle.

The personal driving system 800 monitors, through the sensors within the vehicle 100, the emotional state of the occupant that matches information recognized on the basis of travel-related external data. In this context, the monitoring of the emotional state of the occupant refers to detecting, according to the recognized information, a stressful state of the occupant detected through the sensors within the vehicle while the vehicle 100 travels.

The personal driving system 800 monitors the emotional state of the occupant and selects and determines information triggering the stressful emotion of the occupant among the recognized information. The personal driving system 800 operates to adjust the travel and/or path of the vehicle 100 according to the determination in such a manner as to alleviate the stressful emotion of the occupant.

In this context, the adjusting of the travel and/or path of vehicle 100 may include generating and/or changing a driving control value related to the vehicle travel and/or bypassing/avoiding at least one portion of a current travel path of the vehicle or generating a new path through the personal driving system 800.

The personal driving system 800 may train the pre-trained driving model by using as an input value a result of controlling the travel and/or path of the vehicle 100 by reflecting the emotional state of the occupant. The driving model, additionally trained to reflect the emotional state of the occupant in this manner, is referred to as the 'personal driving model' according to the present disclosure.

The 'personal driving model' is trained to immediately reflect the emotional state of the occupant. In this respect, the 'personal driving model' may be regarded as using Al end-to-end learning. In addition, instead of using all recognized information, the 'personal driving model' uses, as selective data, recolonization information matching the stressful state of the occupant. In this respect, the 'personal driving model may be regarded as using Deep Dense Reinforcement Learning (D2RL), which results from an enhancement of deep learning technology. However, the training of the 'personal driving model' is not limited to the aforementioned learning methods.

The personal driving system 800 may store and manage occupant information and the personal driving model in a manner that matches the two. Accordingly, even when the occupant drives or rides in another vehicle, the occupant can experience travel according to a personalized driving model based solely on the recognition of the occupant.

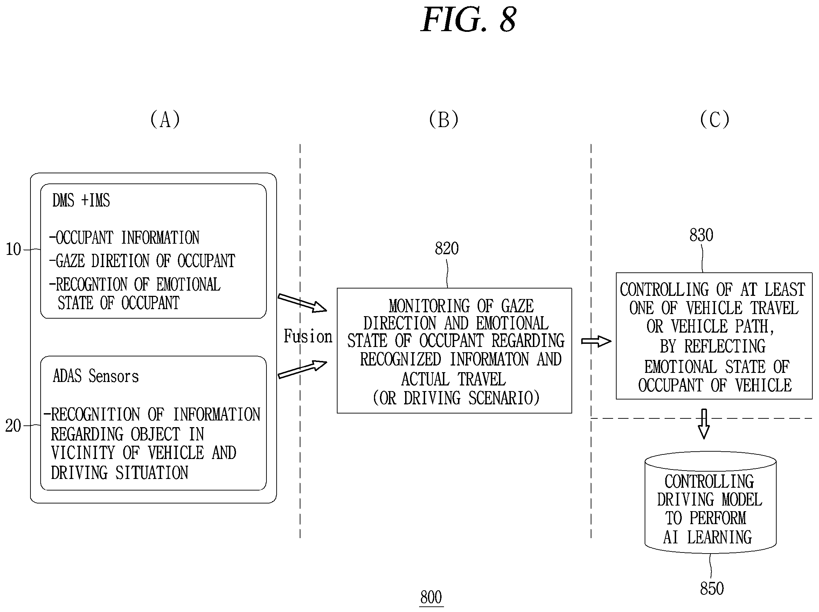

FIG. 8 is a block diagram that is referenced to describe a conceptual configuration of the personal driving system 800 according to the embodiment of the present disclosure. The personal driving system 800 in FIG. 8, as illustrated in FIG. 7, may be implemented within the vehicle 100, but may be implemented as a system separate from the vehicle 100.

The personal driving system 800 operates to adaptively adjust a driving style and a travel path of an autonomous driving vehicle by reflecting an emotional state of a driver or occupant onboard the autonomous driving vehicle. To this end, the personal driving system 800 may broadly include a recognition unit A, a determination unit B, and a control unit C. In addition, the personal driving system 800 may include an interface unit (not illustrated) for receiving or transmitting data or information from or to an external source.

The recognition unit A may include an occupant recognition module 10 and a driving situation recognition module 20. The occupant recognition module 10 recognizes information about the occupant and the emotional state of the occupant, and the driving situation recognition module 20 recognizes information related to the vehicle travel.

To this end, the cognitive unit A receives data, collected by the occupant recognition module 10 and the driving situation recognition module 20 during the vehicle travel, through the interface unit from the vehicle 100 or from an external source.

The occupant recognition module 10 can recognize occupant information, a gaze direction of the occupant during vehicle travel, and the emotional state of the occupant during vehicle travel, using the sensors on the interior or exterior of the vehicle. Specifically, the occupant recognition module 10 may recognize the emotional state of the driver or occupant onboard the vehicle based on the information regarding the driver or occupant, his/her gaze, behavior, facial expression change, heart rate derived from facial blood flow, and/or other biometric signals, using a driver monitoring system (DMS) and/or an interior monitoring system (IMS) within the vehicle.

Although not illustrated in detail, the occupant recognition module 10 may also recognize the emotional state of the driver by monitoring the behavior of the driver through an additional sensor within the vehicle. For example, it may be determined that the driver abruptly holds on the steering wheel; this determination is made by combining the strength, frequency, interval, and the like with which the driver grips or touches the steering wheel. The strength, frequency, interval, and the like are detected through a grip or touch sensor installed on the steering wheel. In this case, it may be determined that the driver is in a tense state. Alternatively, for example, it may be determined that the driver abruptly puts the foot on the brake; this determination being made by combining the strength, frequency, interval, and the like with which the driver puts the foot on the brake. In this case, it may be determined that the driver is in a tense state. This determination facilitates the recognition of the tense state of the driver that may not be monitored solely by the DMS and/or the IMS.

The driver monitoring system (DMS) and/or the interior monitoring system (IMS) serve as a driver or occupant monitoring system. For example, the DMA and/or the IMS may identify the face of the driver or occupant and track the pupils using a driver or occupant camera to which an LED light source or a laser is mounted.

The occupant recognition module 10 may identify the face of the driver or occupant and check registered information using the DMA and/or IMS. In a case where the driver or occupant is registered, it may be checked whether a corresponding personal driving model is stored. When available, the personal driving model is retrieved. When the result of identifying the face of the driver or occupant is that the driver or occupant is not registered, the basic information, such as the gender and the age group (e.g., elderly, children, or the like) of the driver or occupant, and a state (e.g., whether the driver or occupant is at work, drowsy, or and like) are checked, and a corresponding pre-trained driving mode is retrieved. Alternatively, a similar personal driving style is checked and retrieved.

The DMS and/or IMS may monitor the state of the driver or the occupant on the basis of data (e.g., data related to eye blinking, a head angle, facial blood flow, a gaze direction, yawning, drowsiness, smoking, distraction, or the like) collected through the driver or occupant camera. For example, the DMS and/or the IMS may monitor the emotional state, such as tension, fear, and stress, based on facial expression change and facial blood flow of the identified driver or occupant.

The driving situation recognition module 20 may recognize information regarding an object in the vicinity of the vehicle and a driving situation using data provided by a sensor on the exterior of the vehicle and an external source.

Specifically, the driving situation recognition module 20 may recognize objects (e.g., another vehicle, a pedestrian, a motorcycle, a lane, guardrails, a traffic light, a traffic sign, and the like) in the vicinity of the travel vehicle using a camera and a LiDAR on the exterior of the vehicle.

In this context, the LiDAR, installed in the vehicle 100, may emit laser pulses to the surroundings of the vehicle 100 and may detect light reflected by an object located in the vicinity of the vehicle 100, thereby generating a three-dimensional image (more precisely, a corresponding 3D point group data) of the surroundings of the vehicle 100. In addition, a plurality of external cameras may be installed on the exterior of the vehicle 100 and may acquire a two-dimensional image of the surroundings of the vehicle 100. In another embodiment, sensors included in the Advanced Driver Assistance System (ADAS), for example, a radar, an ultrasonic sensor, a LiDAR, and a camera, may all be used as sensors to be installed on the exterior of the vehicle.

In addition, the driving situation recognition module 20 may recognize travel- or traffic-related information through information retrieved from an external map using MAP (ADASIS) and/or through a vehicle network application using V2X, 5G, or the like. For example, the driving situation recognition module 20 may recognize traffic accident-prone area information, live traffic information, construction section information, disaster information, and traffic control information due to events (e.g., a festival, a marathon, or the like) using MAP (ADASIS), V2X, 5G, or the like. In addition, for example, the driving situation recognition module 20 may recognize not only travel-related information, such as information on the presence of road shoulders, time, traffic volume, travel speed, sudden stop, and traffic congestion, and emergency light information, but also weather information (e.g., snow, rain (wiper/black ice detection)), using MAP (ADASIS), V2X, 5G, or the like.

The determination unit B may determine whether to change a driving style, resulting from reflecting the emotional state of the occupant, on the basis of the result of monitoring (820) the gaze direction and the emotional state of the occupant regarding the information recognized through the recognition unit A and the travel of the vehicle 100 (or a driving mode or scenario). In this context, the changing of the driving style refers to changing at least one of the following: a vehicle travel method (for example, a travel speed, a distance to a vehicle ahead, a distance to an adjacent lane or a guardrail, or the like) or a travel path, in such a manner that the emotional state of the occupant is alleviated.

The determination unit B may perform monitoring (820) to determine whether the gaze direction and the emotional state of the occupant, which are monitored by matching the information recognized through the recognition unit A with the vehicle travel, correspond to a stressful state or a relaxed state.

In this context, the stressful state refers to a state in which the sympathetic nervous system is activated, for example, a negative emotional state of the occupant, such as anxiety, disgust, tension, anger, irritation, or fear, that is derived from facial blood flow. For example, when an increase in facial blood flow or an anxious gaze direction of the driver or occupant, which is monitored by the DMS and/or the IMS, occurs, or when a sudden grip of the steering wheel or a brake operation, which is detected by an additional sensor, occurs, the driver or occupant can be recognized as being in a stressful state (moreover, in a case where this event is monitored for a predetermined number of times or more, the driver or occupant may be recognized as being in a stressful state). In addition, the relaxed state refers to a state in which the parasympathetic nervous system of the autonomic nervous system is activated, meaning that the occupant is kept in a baseline state as opposed to the aforementioned negative emotional state.

The determination unit B acquires an emotional state (e.g., a stressful state derived from facial blood flow) of the driver or occupant regarding a specific object or a specific driving situation by integrating information recognized through the recognition unit A, that is, information regarding an object or a driving situation in the vicinity of the vehicle, with the results of monitoring the gaze direction and emotional state of the driver or occupant. The determination unit B may determine whether to change a current drive style based on the acquired emotional state.

The control unit C may operate to control at least one of the following: the vehicle travel or the vehicle path, according to the determination (830). In addition, the control unit C may control the driving model in such a manner as to perform artificial intelligence (AI) learning based on the result of the control, the result reflecting the emotional state of the driver or occupant (850).

Specifically, the control unit C may control the vehicle travel or the vehicle path on the basis of an object in the vicinity of the vehicle 100 and information indicating that the emotional state of the occupant is monitored as a stressful state, the information being selected from among external information. The control unit C may train the driving mode using the monitored and selected information, thereby generating or updating the personal driving model.

In this context, the driving model is a pre-trained driving model and performs reinforcement learning on the basis of selected information instead of all recognized information, thereby not requiring a vast amount of input data. In this context, the selected information may be input data for performing end-to-end learning to immediately change the driving style of the vehicle on the basis of the selected information. That is, the selected information does not simply refer to sensor data or external data, but rather refers to personalized information representing a driving control value or a path control value that is adjusted according to the gaze direction and the emotional state of the occupant, which are derived from the sensor data or external data. Therefore, the selected information is different from a specific control value or a control value for a specific driving mode on the basis of the same sensing value or external data value.

Since the driving mode personalized on a per-driver or occupant basis is trained in this manner, it is possible that the personal driving system 800 according to the embodiment of the present disclosure eliminates riding discomfort. However, the personalized driving model may be trained by a multiplicity of neural networks connected to a large neural network. Alternatively, the personalized driving model may be trained from an updated version of the original version. In this case, the personalized driving model may be managed in a manner that is transmitted together when occupant information is transmitted or is deleted together when the occupant information is deleted.

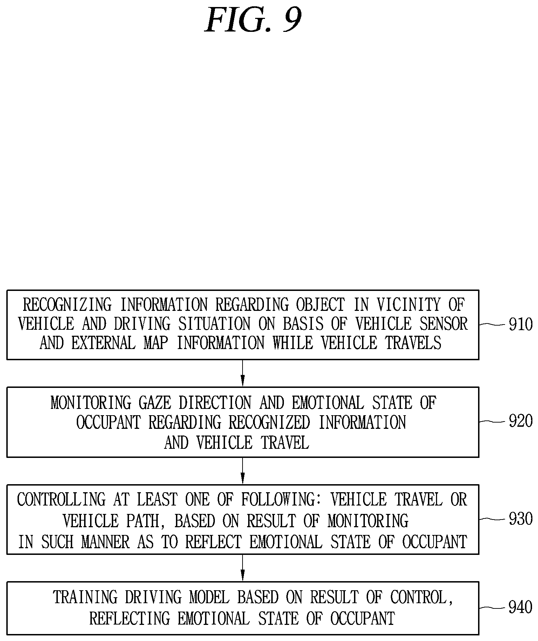

FIG. 9 is a representative flowchart that is referenced to describe a method of controlling personal driving of the vehicle associated with the embodiment of the present disclosure.

Each step, illustrated in FIG. 9, may be performed by each constituent element (the recognition unit A, the determination B, or the control unit C in FIG. 8, or a controller or processor (not illustrated)) of the personal driving system 800, a processor of the vehicle 100, or a service platform providing a personal driving control service. However, for the convenience of description, these will be hereinafter collectively referred to as the personal driving system 800. In addition, a method of controlling personal driving, illustrated in FIG. 9, may be performed on the assumption that a driving mode of the vehicle 100 is activated in a manner that is executed as a personal driving mode.

The method of controlling personal driving, according to an embodiment of the present disclosure, includes Step S910 of recognizing the travel-related information, Step S920 of monitoring the emotional state of the occupant, Step S930 of controlling the vehicle travel or the vehicle path on the basis of the fusion of the recognized information with the emotional state, and Step S940 of training the driving model on the basis of the result of the control.

Step S910 of recognizing the travel-related information includes recognizing information regarding an object in the vicinity of the vehicle and a driving situation on the basis of information obtained by a sensor of the vehicle and information related to an external map while the vehicle travels.

The vehicle may perform autonomous driving using a pre-trained artificial intelligence (AI) driving model. In addition, when the autonomous driving mode is executed, the vehicle may independently perform autonomous driving according to a driving method that matches the recognized information.

In addition, while traveling, the vehicle may recognize various types of information regarding an object in the vicinity of the vehicle and a driving situation using data provided by a sensor on the exterior of the vehicle and an external source. Specifically, the vehicle may recognize an object (e.g., another vehicle, a pedestrian, a motorcycle, a lane, guardrails, a traffic light, a traffic sign, and the like) in the vicinity of the vehicle using a camera and a LiDAR on the exterior of the vehicle 100. In addition, the vehicle may recognize information regarding a travel- or traffic-related driving situation through the information retrieved from the external map using MAP (ADASIS) and through the vehicle networking application using V2X, 5G, or the like.

According to an embodiment, when it is detected that an occupant boards the vehicle, the vehicle may recognize occupant information through a sensor within the vehicle, such as the IMS. For example, the vehicle may determine, on the basis of the face of the occupant identified through the sensor within the vehicle, whether the driver or occupant is registered. To this end, facial information or the like, pre-stored by the user, may be stored in the memory of the personal driving system 800 or a memory of an apparatus, a server, or a system that operates in conjunction with the memory of the personal driving system 800.

Subsequently, the personal driving system 800 performs Step S920 of monitoring the gaze direction and the emotional state of the occupant regarding the recognized information and the vehicle travel while the vehicle travels. The monitoring may be performed at the same time as the information regarding the object in the vicinity of the vehicle and regarding a driving situation is recognized.

According to an embodiment, in Step S920 of monitoring the gaze direction and the emotional state of the occupant, the emotional state of the occupant regarding a specific object or a specific driving situation may be determined by fusing (integrating) the recognized information with the results of monitoring the gaze direction and the emotional state of the occupant. That is, the emotional state of the occupant may be determined by fusing (integrating) the aforementioned recognized information with the gaze direction and the emotional state of the occupant.

The fusion (integration) refers to a method of combining information, related to an object in the vicinity of the vehicle and to travel or traffic, the information being acquired from different sensors on the exterior of the vehicle, with the result of monitoring the emotional state of the occupant, the emotional state being related to the vehicle travel. According to the fusion (integration) method, information regarding the response of the occupant to the information related to an object in the vicinity of the vehicle and to travel or traffic, the information being recognized by various sensors, may be fused, thereby selecting information triggering a stressful emotional state of the occupant. The fusion (integration) may include combining various types of information in accordance with a known algorithm and thus generating the result of the combination as selected information that triggers a stressful emotional state of a specific occupant. The terms combination, coupling, integration, and alignment may be used to mean the fusion (integration).

The personal driving system 800 may measure the occupant's behavior, gaze direction, pupil movement, facial expression, emotional change, heart rate derived from facial blood flow, and the like through the driver monitoring (DMS), the interior monitoring system (IMS), the occupant monitoring system (OMS), and the like within the vehicle. Thus, the personal driving system 800 may determine the gaze direction and the emotional state (e.g., a stressful state, a tense state, or the like) of the occupant regarding a specific object and/or a specific driving situation.

The heart rate, derived from facial blood flow, is measured as follows. The camera, the LiDAR, or the like, which is included in the DMS, the IMS, or the OMS, emits light toward the occupant's face, and the emitted light is reflected from the occupant's face. The light diffused and reflected by the facial blood flow in the occupant's face is analyzed to measure the heart rate.

When the heart rate data is acquired in a non-contact manner, heart rate variability (HRV), which indicates that the heart rate intervals vary over time, may be checked, thereby determining whether the emotional state of the occupant indicates a stressful state.

Generally, when a person experiences stress, the sympathetic nervous system becomes activated. The activation of the sympathetic nervous system results in an increase in heart rate. In addition, in a case where a person is healthy, HRV appears large and complex, but in a high-stress state, the complexity of the HRV is significantly reduced. Therefore, when the heart rate increases and the variability and complexity of the HRV decrease, it may be determined that the occupant is in a stressful state.

For example, while the vehicle travels, the gaze direction of the driver, monitored through the DMS, the IMS, and the like, may be consistent with (match) the location of an object, recognized through a front camera of the vehicle for a predetermined time or longer or for a predetermined number of times or more, and the heart rate derived from facial blood flow may be detected as increasing. In this case, the personal driving system 800 may determine that the emotional state of the occupant regarding the appearance of the object indicates a stressful state. Alternatively, for example, it may be determined that, while the vehicle travels, an increase in the heart rate derived from facial blood flow of the driver, monitored through the DMS, the IMS, and the like, matches the information obtained by fusing the slope of the travel path and the current travel speed. In this case, the personal driving system 800 may determine that the emotional state of the occupant regarding such a driving style indicates a stressful state.

A radar-based method utilizes Frequency-Modulated Continuous Wave (FMCW) technology. However, it is possible that a heart rate derived from facial blood flow is measured through a method using a Photoplethysmogram (PPG) sensor, as well as various methods utilizing BlazeFace, which is a feature extraction technique. In addition, it may also be determined whether the emotional state of the occupant indicates a stressful state using other sensors or algorithms not mentioned herein.

In another embodiment, the personal driving system 800 may match information, recognized a predetermined time before the determination that the gaze direction and the emotional state of the occupant reflect a stressful state, with the determination that the gaze direction and the emotional state of the occupant indicate a stressful state or a tense state. This matching is intended to assume that the occurrence of the stressful state of the occupant may be monitored a predetermined time after the occurrence of a specific object or a specific situation.

Subsequently, the personal driving system 800 may perform Step S930 of controlling at least one of the following: the vehicle travel or the vehicle path, based on the result of the monitoring in such a manner as to reflect the emotional state of the occupant.

Specifically, based on the result of monitoring that the occupant is in a stressful state regarding a specific object or a specific driving situation, the personal driving system 800 may operate to change at least one of the following: the driving style or the travel path, each of which is related to the specific situation.

For example, based on the result of monitoring that the occupant is in a stressful state regarding the frequent appearance of an overtaking vehicle in front of the vehicle, the personal driving system 800 may change the distance between the vehicle and the preceding vehicle to be shorter than the previous distance. In addition, for example, based on the result of monitoring that the vehicle travels at a regulated speed on a downhill slope, but the occupant is in a tense state, the personal driving system 800 may subsequently modify the path to detour to a gentler slope, and/or may change the travel speed of the vehicle to be lower than the regulated speed.

Subsequently, the personal driving system 800 may further perform Step S940 of training the vehicle driving model based on the result of the control, the result reflecting the emotional state of the occupant.

In this context, the vehicle driving model may be a driving model that has been pre-trained through Al machine learning or reinforcement learning.

Input data used in Step S940 of training the vehicle driving model is related to specific information selected from all recognized information, and is not a vast amount. In addition, in Step S940 of training the vehicle driving model, the vehicle driving model is trained through end-to-end learning as Al reinforcement learning, and thus the control result, derived from the selected information, may be immediately in the driving model. Consequently, the driving model personalized on a per-occupant basis may be generated and updated.

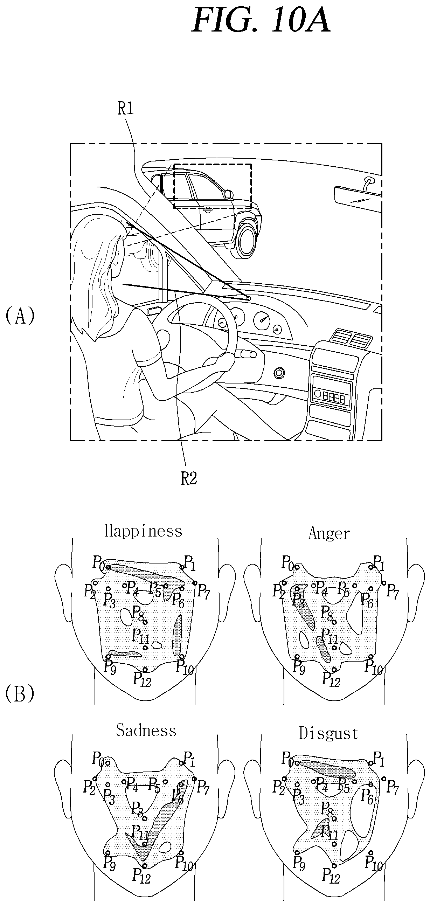

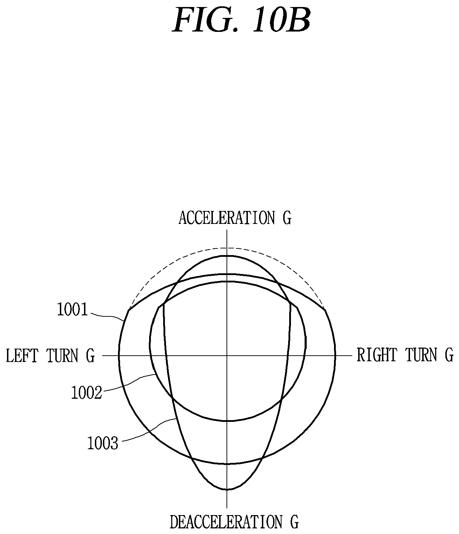

FIGS. 10A and 10B are views that are referenced to describe in detail the recognition of the stressful emotional state of the occupant and the reflection of the recognized stressful emotional state in the driving control of the vehicle.

The personal driving system 800 may collect data related to the gaze direction and the emotional state of the occupant using at least one of the following: the MDS or the IMS, each of which is included in the vehicle 100.

The personal driving system 800 may determine, based on the collected data, whether the emotional state of the occupant regarding the information, recognized on the basis of the data provided from a sensor of the vehicle and from an external source, and regarding the actual vehicle travel, indicate a stressful state.

The recognized information may include various objects in the vicinity of the vehicle and various types of travel- or traffic-related information. For example, the recognized information may include a situation in which an adjacent vehicle overtakes, traffic congestion, a stopping situation at an intersection, a pedestrian crossing, a vehicle parked on a road shoulder, road surface conditions, weather conditions, a road without other vehicles, guardrails, and a large vehicle, such as a truck.

From (A) of FIG. 10A, it can be seen that gaze R1 that the driver of the vehicle directs toward a large vehicle ahead of the vehicle while the vehicle travels is monitored through, for example, the DMS, that is, a driver monitoring system R2 within the vehicle. The DMS may monitor, using a camera to which an LED light source or a laser is mounted, that the driver's gaze is frequently directed toward a large vehicle ahead, and the heart rate, derived from the facial blood flow, increases.

The personal driving system 800 may determine the emotional state of the driver by fusing driver information and the emotional state with information about a large vehicle recognized as an object in the vicinity of the vehicle. For example, with reference to (B) of FIG. 10A, various emotional least states, for example, happiness, anger, sadness, and disgust, may be recognized by detecting camera-based facial expression changes. For example, in a case where anger or disgust is detected, the emotional state of the driver may match a stressful state.

That is, through the fusion of gaze information of the driver with the result of recognizing an object ahead of the vehicle, information and the emotional state regarding a specific object that the driver monitors may be acquired and matched. The information and the emotional state may be input as selected information for training the pre-trained driving model as a personal driving mode.

The vehicle travel or the vehicle path may be controlled to reflect the emotional state of the driver by fusing the driver information and the emotional state with the information about the large vehicle recognized as an object in the vicinity of the vehicle.

Examples of the vehicle driving control may include longitudinal or lateral acceleration (automatic aggressive, comfort, or eco), desired distance between vehicles, travel speed, auto lane change, lane offset driving, and the like.

Examples of the vehicle path control may include the selection of a route that minimizes curved paths to reduce body rolling, a route that minimizes stop- and-go traffic at traffic lights to prevent motion sickness, and a route that minimizes the number of pedestrians.

Specifically, for example, a lane may be automatically changed by reflecting the emotional state of the driver regarding a vehicle (e.g., a preceding or following truck or a vehicle with a driver under the influence or drowsy) identified as causing a risk, thereby avoiding the risk. In addition, for example, the driving speed may be reduced, or the vehicle path may be changed by reflecting the emotional state of the driver regarding a pedestrian located on the road shoulder or an object crossing illegally.

In this manner, after the vehicle travel and the vehicle path are controlled, the gaze direction and the emotional state of the driver are continuously monitored. In a case where the stressful state of the driver is not alleviated, the driving control may be performed in stages.

In this regard, FIG. 10B illustrates examples of stepwise driving controls 1001, 1002, and 1003 regarding a stressful emotional state that the driver feels concerning a surrounding object or each vehicle travel situation during forward-view monitoring while the vehicle travels. That is, the driving control is performed in stages by continuously monitoring whether the stressful state of the vehicle is alleviated.

In each stage, vehicle travel deceleration or acceleration, and the degree of lateral path deviation during left or right turning vary. FIG. 10B illustrates that, as the level of the driving control increases, the degree of travel deceleration or acceleration increases, and the degree of lateral path deviation decreases during left or right turning. However, the present disclosure is not limited to this specific correlation, and other control techniques or degrees may be employed. In addition, the vehicle travel is not intended to be controlled at a specific value; rather, the driving control value is intended to be changed in stages to generate a driving style customized on a per-driver basis.

For example, when the emotional state of the driver, monitored while the driving control is performed at a first level 1001, is observed as having a stress index, the vehicle may travel by performing the driving control at a second level 1002. Subsequently, in a case where the emotional state of the driver, which is continuously monitored, is alleviated, the driving control remains active at the second level 1002. Otherwise, the vehicle may travel by performing the driving control at a third level 1003.

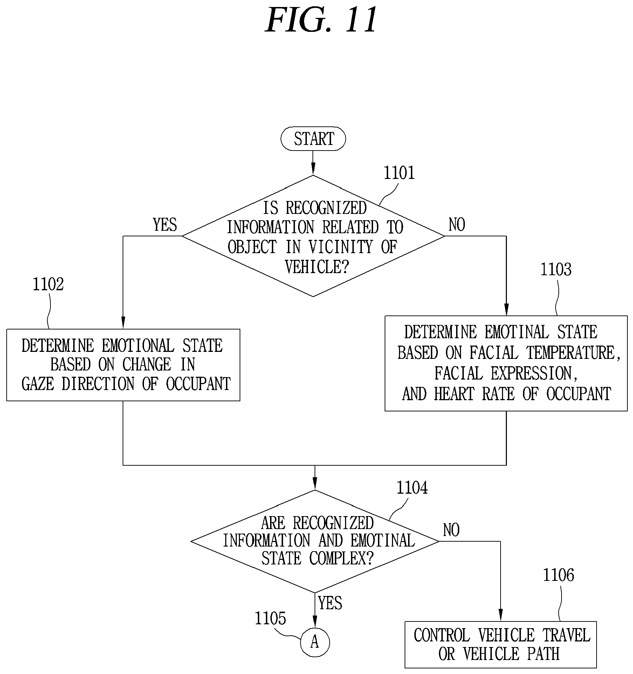

FIG. 11 is a flowchart that is referenced to describe a method of matching complex recognition information with emotional state information of the occupant according to the operation of the personal driving system 800.

The data used to determine the emotional state of the occupant may vary according to the type or attribute of the recognized information. In addition, in a case where a plurality of types of information or complex pieces of information are simultaneously recognized, which information is used to determine the vehicle travel or the vehicle path, or how the recognized information is reflected during the vehicle travel or control, varies.

With reference to FIG. 11, the personal driving system 800 determines whether information recognized on the basis of data from a sensor of the vehicle or from an external source is related to an object in the vicinity (S1101).

According to an embodiment, when the information recognized on the basis of data from a sensor of the vehicle or from an external source is related to an object in the vicinity of the vehicle, the emotional state may be monitored based on data related to the gaze direction of the occupant (S1102).

For example, the personal driving system 800 may determine whether the occupant is in a tense state by assigning a weight to the score resulting from monitoring the gaze direction of the occupant.

According to an embodiment, when the information, recognized on the basis of data from a sensor of the vehicle or from an external vehicle, is related to properties different from those of an object in the vicinity of the vehicle, the personal driving system 800 may monitor the emotional state based on data related to a change in facial temperature of the occupant and to the heart rate of the occupant (S1103).

For example, the personal driving system 800 may determine whether the occupant is in a stressful state by assigning a weight to the score resulting from monitoring the heart rate derived from the facial blood flow of the occupant. In this context, a stress index matching the monitored heart rate may be stored in a look-up table or similar data structure, and the personal driving system 800 may determine the stressful state or stress degree of the occupant by matching the weighted score with each stress index.

Subsequently, according to an embodiment, the method may include Step S1104 of determining whether the recognized information, which matches the stressful state of the occupant, includes complex information.

When the result of the determination 1104 is that the recognized information and the emotional state of the occupant are not complex, the personal driving system 800 may control the vehicle or the path using a specific travel technique determined by fusing specific information and the emotional state (S1106). For example, the distance between the vehicle 100 and the preceding vehicle may be reduced by reflecting an integrated irritable emotional state regarding a situation in which another vehicle overtakes, thereby deterring a situation in which another vehicle overtakes.

In a case where the result of the determination 1104 is that the recognized information and the emotional state of the occupant are complex, the vehicle travel or the vehicle path may be controlled according to Operation A (1105). Various embodiments of Operation A (1105) may be provided.

As one embodiment of Operation A (1105), the personal driving system 800 may control the vehicle travel or the vehicle path, each of which matches each piece of information in the recognized complex information, in the direction of alleviating the stressful state of the occupant. For example, in a case where the vehicle 100 travels in a section in which many vehicles are parked on road shoulders ('Recognition Information 1') and the section is a steep downhill ('Recognition Information 2'), when it is determined that the occupant is in a stressful state, an offset distance to an adjacent lane is set to be widened ('Control 1'), and the travel speed of the vehicle may be reduced below the current travel speed that is within the allowable speed ('Control 2').

As another embodiment of Operation A (1105), the personal driving system 800 may selectively control the vehicle travel or the vehicle path, which matches one piece of information selected from the recognized complex information, in a weighted manner, in the direction of alleviating the stressful state of the occupant. For example, in the situations exemplified by Recognition Information 1 and Recognition Information 2, Control 2 may be selected. In this context, the extent to which the vehicle travel speed is reduced may be controlled in a more weighted manner.

As another embodiment of Operation A (1105), it is possible that the vehicle travel or the vehicle path is controlled using an optimal method selected by monitoring the degree to which the stressful emotion of the occupant is alleviated while a plurality of different control methods are performed.

According to an embodiment of the present disclosure, the pre-trained driving model may be trained to reflect the result of Operation A (1105) or the result of the vehicle travel or control (1106), thereby generating or updating the personal driving model.

The pre-trained driving model may be trained using various open datasets, for example, learning data necessary for autonomous driving. The learning data are generated by processing data collected through various sensors, for example, a camera, a LiDAR, and the like, installed in the autonomous driving vehicle. Accordingly, the vehicle 100 may automatically generate the locations, directions, classes, and attributes of objects in an image, such as other vehicles, pedestrians, traffic lights, and signs, using the pre-trained vehicle driving model.

The personal driving model is a driving model generated or updated on the basis of the above-described pre-learned driving model. The personal driving model may be trained using Deep Dense Reinforcement Learning that selectively learns new information (i.e., selected information) on the basis of the emotional state of the occupant regarding the recognized information.

The personal driving model may be an individual driving model trained on the basis of the emotional state of the occupant regarding the recognized information and may be one of various small models connected to a complex model or a base model (e.g., a large neural network model for autonomous driving).

In addition, a plurality of personal driving models may be provided. In this case, the plurality of personal driving models may train each other. In a case where one personal driving model is provided, a plurality of versions of the personal driving model, which are trained based on one base driving model using different methods, may be generated.

According to an embodiment, the personal driving model may be generated or updated by training the driving model in a manner that varies according to an attribute of the recognized information on the basis of the result of the control, the result reflecting the emotional state of the occupant.

For example, after control associated with the recognized information is immediately performed, the post-control result that reflects the emotional state of the occupant may be compared, thereby determining input data for updating the driving model. In addition, for example, depending on the type or characteristics of the recognized information, a case where the emotional state of the occupant occurs as a discrete event (e.g., a sudden appearance of an object) and a case where the emotional state of the occupant is continuous (e.g., a case where a large vehicle travels in parallel along an adjacent lane) are distinguished from each other. This distinction may be reflected in the vehicle travel or the vehicle path or in determining whether to update the personal driving model.

According to an embodiment, the personal driving system 800 generates first driving information, which is based on the recognized information, using the pre-trained driving model. In this context, the first driving information includes all control information (e.g., a travel speed, a distance to a preceding vehicle, automatic lane change, and other similar functions) of autonomous driving according to a common autonomous driving mode or a selected driving mode (e.g., a ride comfort priority mode or a fuel efficiency priority mode).

According to an embodiment, the personal driving system 800 may generate second driving information related to the first driving information on the basis of the emotional state of the occupant regarding the first driving information and may train the previous driving mode on the basis of the generated second driving information. In this context, the second driving information includes all control information (e.g., the extent of decrease or increase in the travel speed, a decrease in a travel distance to a preceding vehicle, an adjustment of an offset distance to an adjacent lane, and the like) changed according to information selected on the basis of the emotional state of the occupant regarding specific perception information.

In this context, the changed control information refers to a specific control value for each specific cognitive information. In addition, the changed control information may be set to have a specific control value that varies according to the result of continuous monitoring for assessing the degree of subsequent alleviation, even in a case where the occupant remains in the same stressful state regarding the same recognized information. Accordingly, it is possible that autonomous driving and driving model generation are possible for a specific purpose (e.g., ride comfort priority, fuel efficiency priority, or the like) or for the driving style on a per-occupant basis instead of stable average control.

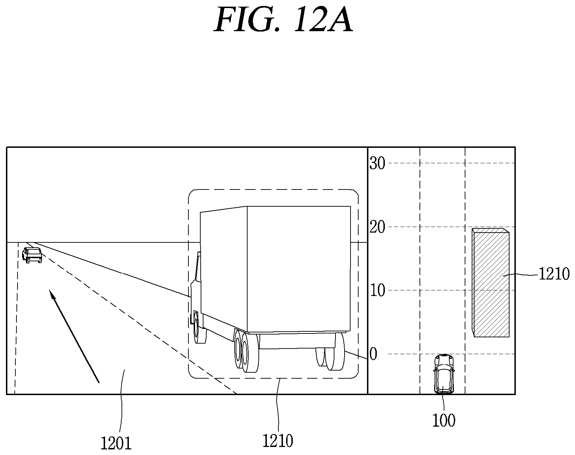

FIGS. 12A, 12B, 13A, 13B, 13C, 14A, 14B, 15A, 15B, 16A, and 16B are views illustrating various embodiments, respectively, in which, in various driving situations, the vehicle travel or the vehicle path is controlled as feedback to the emotional state of the occupant.

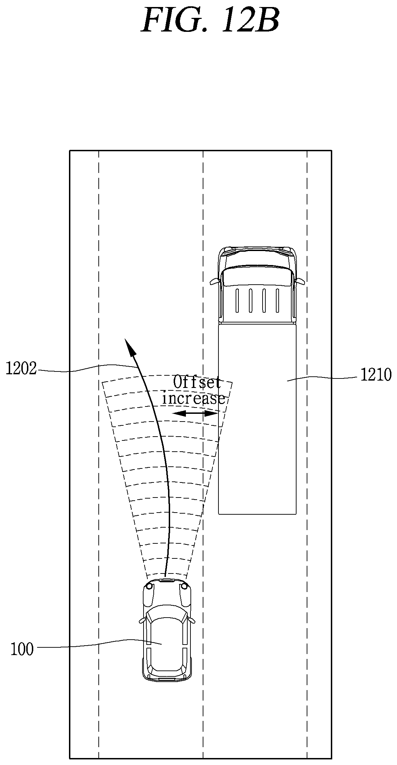

Specifically, FIGS. 12A and 12B illustrate embodiments, respectively, in which, in a situation in which a large vehicle travels in parallel ahead of the vehicle 100, the vehicle travel is controlled by reflecting the sensation of threat felt by the occupant of the vehicle.

The personal driving system 800 may recognize, through the front camera and RiDAR (or the radar) of the vehicle 100, the information indicating the presence of a large vehicle 1210 that travels in parallel along an adjacent lane to a travel lane 1201 for the vehicle 100. The personal driving system 800 may determine that the emotional state of the occupant, monitored through, for example, the DMS, the IMS, and/or the like, regarding the recognized information, reflects the sensation of threat (e.g., the gaze toward the large vehicle 1210, an increase in the heart rate derived from facial blood flow, and/or the like) felt by the occupant of the vehicle. The personal driving system 800 increases an offset to the travel lane 1201 according to the determination, and thus, increases an offset to the large vehicle 1210. That is, the personal driving system 800 controls the vehicle 100 to travel by adjusting the distance in the direction of moving away from the large vehicle 1210.

To this end, the personal driving system 800 may control the vehicle travel using a local path planning technique. The local path planning technique is a path planner that plans a local path when a global path is given or a local destination is set. The local path planning technique is used in obstacle avoidance travel or biased travel. For example, when the vehicle 100 travels autonomously, traffic cones and the like may block the middle of the road due to construction, or a part of the road may be obstructed by an illegally parked vehicle. In this case, the vehicle comes to a stop. Then, when the obstruction is cleared, the vehicle may resume travel along the global path. However, the use of the local path planning technique is desirable for real-time obstacle negotiation and adaptive maneuvering.

The personal driving system 800 may determine whether the subsequently monitored emotional state of the occupant is alleviated (e.g., a reduction in the gaze fixation of the occupant, a reduction in the heart rate derived from facial blood flow, and/or the like) and, on the basis of the determination, may generate (store) or update the result of the control, the result being obtained by the local path planning technique.

When it is recognized, after the control based on the local path planning technique, that the large vehicle 1210 no longer travels in parallel with the vehicle 100, the personal driving system 800 may control the vehicle 100 to travel by reverting the offset of the vehicle 100 to a previous state.

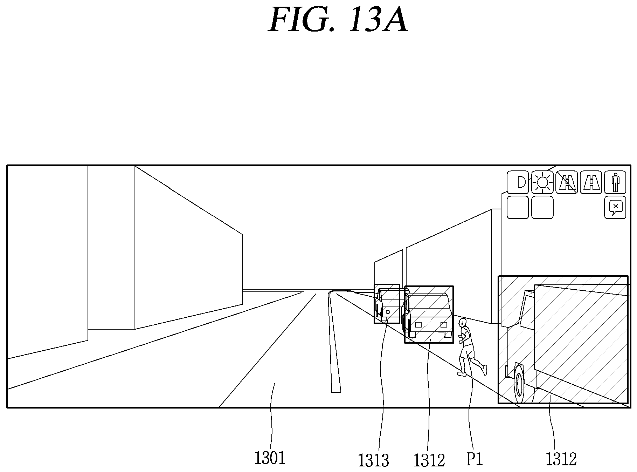

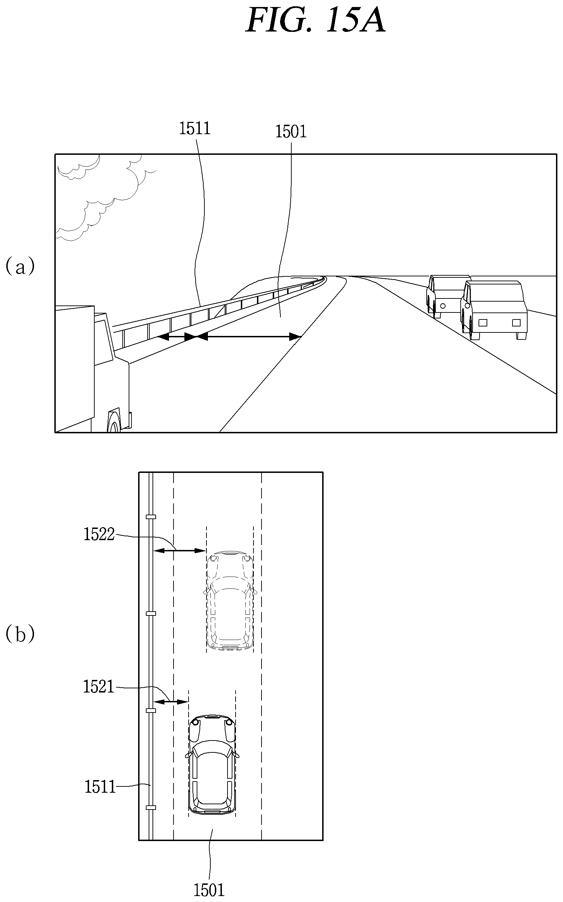

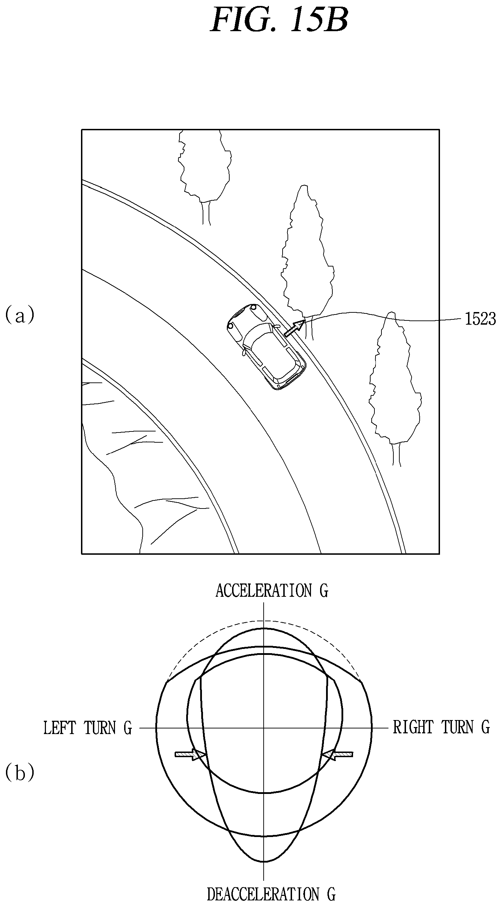

As other embodiments, FIGS. 13A to 13C, 15A, and 15B illustrate specific embodiments, respectively, in which the travel or path is controlled on the basis of the emotional state of the occupant, which is monitored while the vehicle travels in a specific section.

The personal driving system 800 may recognize that the vehicle 100 travels in a section that satisfies a specific condition, for example, a first condition, and may determine, by integrating the recognized information with the result of monitoring the emotional state of the occupant, that the occupant is in a stressful state. In this context, the section that satisfies the first condition corresponds to various cases in which a specific situation occurs in predetermined sections, such as a section in which many vehicles are parked on road shoulders, a narrow alley section, and a section in which guardrails are present adjacent to a travel lane.

In this case, the personal driving system 800 may change the travel path of the vehicle in such a manner that the vehicle travels to avoid the section that satisfies the first condition. Alternatively, the personal driving system 800 may take measures to alleviate the occupant-experienced stressful state by additionally adjusting at least one of the following: the travel distance to a preceding vehicle or the travel speed of the vehicle while the vehicle travels in the section that satisfies the first condition.

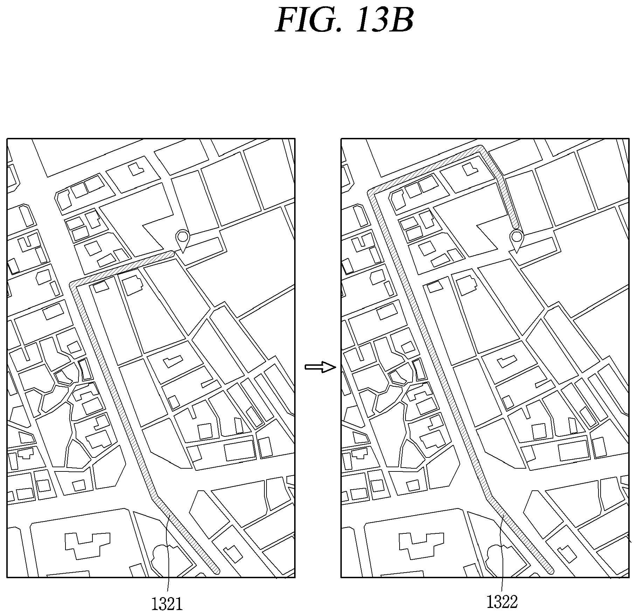

With reference to FIGS. 13A to 13C, when it is determined that, while the vehicle 100 travels, the driver/occupant feels anxiety due to continual exposure to a pedestrian P1 appearing on a road shoulder or illegally parked vehicles 1311, 1312, and 1313, the personal driving system 800, as illustrated in FIG. 13B, may set an avoidance path 1322 for a travel path 1321 based on this fusion information in such a manner that a road with a road shoulder where a pedestrian does not appear is preferentially selected. In this context, the personal driving system 800 may accompany an operation of inquiring the driver or occupant whether to change the travel path to the avoidance path 1322 through a display or the like within the vehicle 100.

In this context, the avoidance path 1322 may be a path that is changed using a global path planning technique. The global path planning technique refers to a technique for planning a path from the current location of a vehicle to a travel destination. The vehicle plans and sets an entire path using a global planner each time a new path is planned.

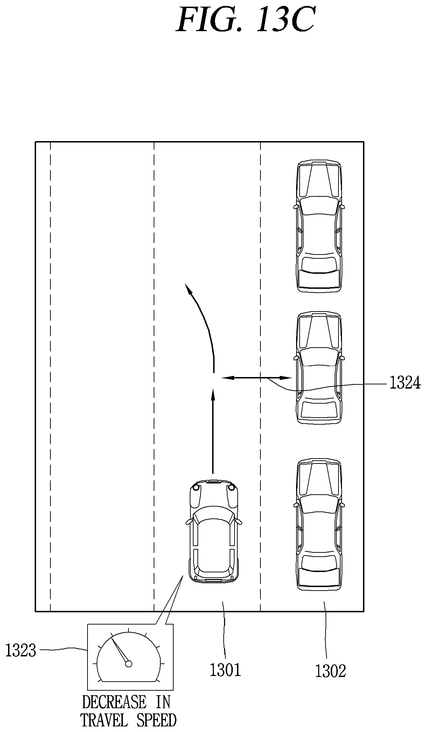

Alternatively, instead of changing the travel path using the global path planning technique, the personal driving system 800, as illustrated in FIG. 13C, may adjust an offset 1324 between a road shoulder 1302 and a travel lane 1301 in the direction of increasing the offset 1324 and/or further decrease a travel speed 1323 of the vehicle 100.

To determine whether a specific situation determined as triggering the stressful state of the occupant corresponds to the section that satisfies the first condition, the personal driving system 800 may determine the emotional state of the occupant by integrating the emotional states of the occupant, which are respectively monitored at a point in time (or a first location) when the vehicle 100 enters the section that satisfies the first condition, at a point in time (or a second location) when a predetermined time elapses after entering the section, and at a point in time (or a third location) when the vehicle 100 exits the section. In this case, the personal driving system 800 may subsequently specify this section or a section similar thereto and reflect the specified section in the personal driving model in such a manner as not to be included in a travel path setting.

FIG. 15A illustrates that, while (a) the vehicle 100 travels adjacent to a guardrail 1511, the occupant of the vehicle 100 is determined to be in a stressful state and (b) a distance, that is, an offset, between the vehicle 100 and the guardrail 1511, is increased from a first distance 1521 to a second distance 1522. In this context, the second distance 1522 indicates that the extent to which a travel lane 1501 of the vehicle moves away from the guardrail 1511 is greater than in the first distance 1521.

When it is monitored that the emotional state of the occupant is alleviated while the vehicle 100 travels with the offset adjusted to the second distance 1522, the personal driving system 800 may store the result of the adjustment in the personal driving model to reflect the result of the adjustment therein. Alternatively, the personal driving system 800 may update a local path planning model of the vehicle, thereby automatically adjusting the offset when the vehicle subsequently travels adjacent to the guardrail with the same occupant onboard.

FIG. 15B illustrates that, while the vehicle 100 travels, an uncomfortable emotional state of the driver or occupant, which matches a curved road situation, is monitored, and accordingly, the vehicle travel is controlled. The personal driving system 800 may control the vehicle 100 to travel with an offset 1523 being adjusted while a curved section is recognized (a). Alternatively, the personal driving system 800 may adjust the offset 1423 in the direction of further decreasing the travel speed while the vehicle 100 travels in the curved section and further decreasing a G-G diagram limit value during left and right turns.

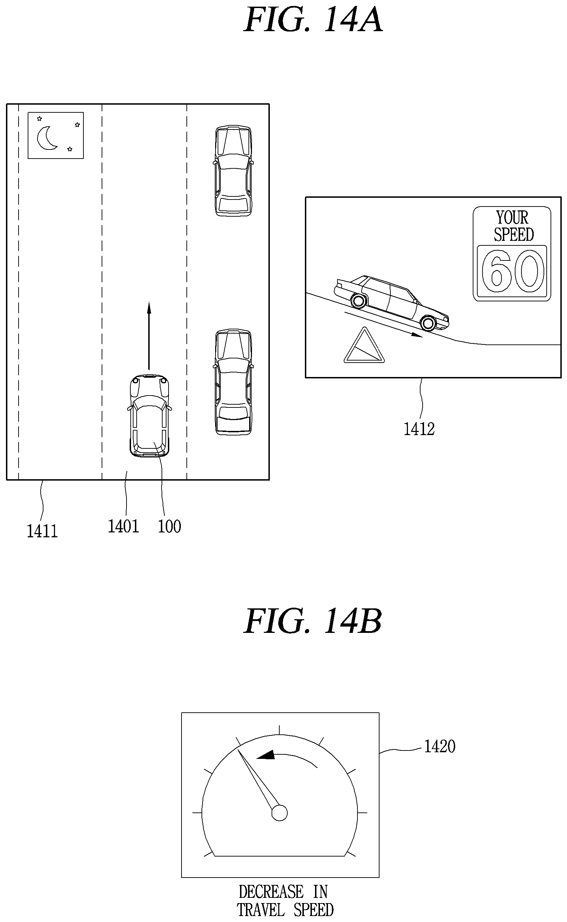

As another embodiment, FIGS. 14A and 14B illustrate embodiments, respectively, in which the vehicle travel is controlled on the basis of the emotional state of the occupant, monitored in a complex situation, such as situations in which the vehicle 100 travels along a steep road with many vehicles parked on the road shoulder.

When it is monitored that the occupant feels stressed while the vehicle 100 travels at a safe speed (e.g., 60 km/h) along the steep road (or under nighttime road conditions), the personal driving system 800 may further decrease the travel speed (e.g., to 40 km/h) by reflecting the emotional state of the occupant. In this context, recognition 1412 of whether the road is steep may be made in an estimated manner, for example, through external data obtained from a map or through sensing data from an ESP, ECU, inertia sensor, and the like of the vehicle 100.

With reference to FIG. 14A, in a situation 1411 in which many vehicles are parked on the road shoulder while the vehicle 100 travels along a steep road, 1) the vehicle 100 may travel by reflecting a control value for each situation in the complex situation, or 2) the vehicle 100 may travel by applying a control value to one selected situation in a more weighted manner.

In Case 1, the offset of the vehicle and the travel speed may be simultaneously, and the vehicle 100 may travel by reflecting the results of the adjustment in the personal driving model. In Case 2, as illustrated in FIG. 14B, the vehicle 100 may travel by decreasing only a vehicle travel speed 1420, but further increasing, by applying the control value in a weighted manner, the extent to which the vehicle travel speed 1420 is decreased. For example, in the embodiment, when the travel speed decreases to 40 km/h in one situation, in the complex situation, the vehicle 100 may travel by further decreasing the travel speed to 30 km/h or less.

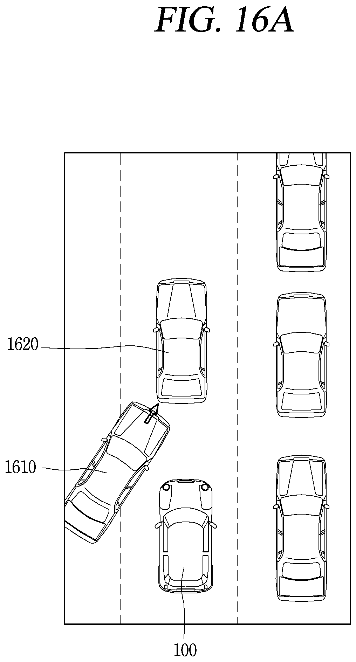

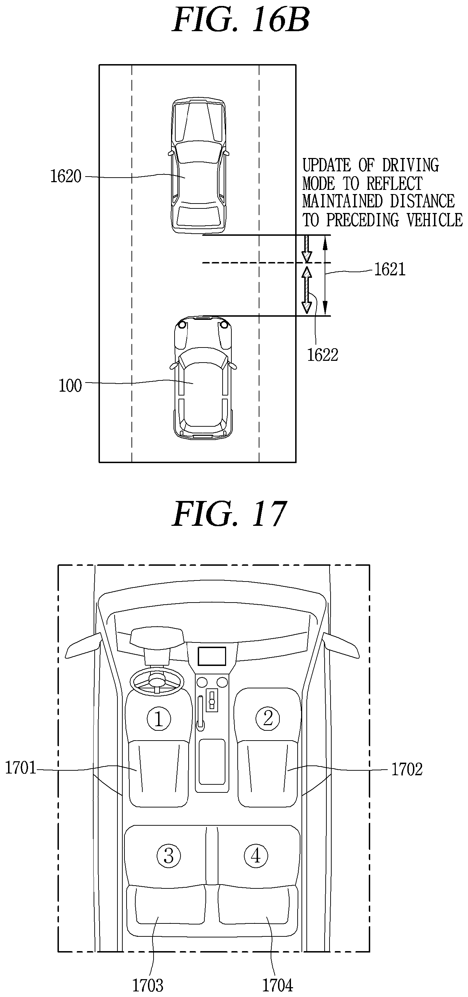

FIGS. 16A and 16B illustrate examples, respectively, in which vehicle driving control is executed in a case where, in a traffic jam situation, an overtaking vehicle in front of the vehicle, as the recognized information, is matched with the uncomfortable emotional state of the occupant.

Specifically, the personal driving system 800 may recognize a situation in which, in the traffic jam situation, another vehicle 1610 keeps overtaking, and may ascertain the uncomfortable emotional state of the driver or occupant, which is monitored through the DMS or the IMS of the vehicle. In this case, the personal driving system 800 may adjust the distance between the vehicle 100 and a preceding vehicle 1620 from a first distance 1621 to a second distance 1622 so that the vehicle 100 travels accordingly. The personal driving system 800 may reflect the result of the adjustment in the personal driving model. In this context, the second distance 1622 is shorter by a predetermined value than the first distance 1621.

FIG. 17 is a view illustrating a method of determining an occupant whose emotional state is to be reflected when the vehicle travel or the vehicle path is controlled in a case where a plurality of occupants are present in the vehicle 100, according to an embodiment of the present disclosure.

According to an embodiment of the present disclosure, in a case where a multiplicity of occupants are present when the recognized information is integrated with the emotional state of the occupant, the personal driving system 800 may determine which occupant's emotional state is to be reflected.

The personal driving system 800 may recommend vehicle control to reflect the emotional state of the driver or display a notification when the driver is onboard, and the vehicle travels in a semi-autonomous driving mode. The personal driving system 800 may execute vehicle control to reflect the emotional state of the occupant when only the occupant is onboard and when the vehicle travels in an autonomous driving mode (e.g., an autonomous driving taxi).

According to an embodiment, in a case where a multiplicity of occupants, for example, occupants 1701, 1702, 1703, and 1704, who include a driver, are onboard, the personal driving system 800 may generate a driving model on a per-occupant basis.

In a case where the multiplicity of occupants (e.g., the occupants 1701, 1702, 1703, and 1704) is simultaneously onboard, the personal driving system 800 may execute vehicle control centered on an occupant selected according to a specific criterion. In this context, the specific criteria may include prioritizing vulnerable groups, such as children and the elderly, and predetermined seat occupancy criteria.

In another embodiment, in the case where the multiplicity of occupants (e.g., the occupants 1701, 1702, 1703, and 1704) are simultaneously onboard, the personal driving system 800 may also perform vehicle travel using a weighted control value or an average control value, taking into consideration the emotional states of all the occupants.

As described above, the method of controlling personal driving of the vehicle according to the embodiment of the present disclosure, the personal driving system, and the vehicle providing the personal driving control service can minimize the sense of detachment during travel by adjusting the travel or path to reflect the emotional state of the driver or occupant regarding the recognition of a driving situation during autonomous driving of the vehicle. In addition, the driving model can be updated on the basis of the result of reflecting the emotional state of the driver or occupant regarding the recognition of the driving situation during autonomous driving of the vehicle, thereby enabling the driver or the occupant to experience more personalized travel comfort. Moreover, the driving model personalized on a per-driver or per-occupant basis can be managed, thereby enabling the driver or the occupant to experience personalized travel using only driver or occupant information, regardless of the vehicle type.

The present disclosure may be implemented in the form of computer-readable code recorded on a program-recorded medium. Computer-readable media include all types of recording devices capable of storing data that are readable by a computer system. Examples of computer-readable media include hard disk drives (HDDs), solid-state disks (SSDs), silicon disk drives (SDDs), ROM, RAM, CD-ROM, magnetic tapes, floppy disks, optical data storage devices, and other similar media. In addition, these media may further include transmission media, such as waves (e.g., waves transmitted over the Internet). In addition, the computer may also include a controller or processor of a personal driving system. Therefore, the detailed description should not be construed as limiting in any respect, but should be regarded as illustrative in nature. The scope of the present disclosure should be determined by the proper interpretation of the following claims. All equivalent modifications to the embodiments of the present disclosure fall within the scope of the present disclosure.

## Claims

1. A method of controlling personal driving of a vehicle, the method comprising:
recognizing information regarding an object in the vicinity of the vehicle and a driving situation on the basis of information obtained by a sensor of the vehicle and information related to an external map while the vehicle drives;
monitoring a gaze direction and an emotional state of an occupant regarding the recognized information and vehicle driving;
controlling at least one of the following: the vehicle driving or a driving path of the vehicle, based on the result of the monitoring in such a manner as to reflect the emotional state of the occupant; and
training a vehicle driving model based on the result of the control, the result reflecting the emotional state of the occupant.

2. The method of claim 1, wherein the monitoring comprises:
collecting data related to the gaze direction and the emotional state of the occupant using at least one of the following: a DMS or an IMS, each of which is included in the vehicle; and
determining, based on the collected data, whether the emotional state of the occupant regarding the recognized information and the vehicle driving indicates a stressful state.

3. The method of claim 2, wherein the monitoring further comprises:
monitoring the emotional state based on data related to the gaze direction of the occupant when the recognized information is related to the object in the vicinity of the vehicle, and
monitoring the emotional state based on data related to a change in facial temperature of the occupant and to a heart rate of the occupant when the recognized information is related to properties different from those of the object in the vicinity of the vehicle.

4. The method of claim 3, wherein the monitoring further comprises:
determining that the recognized information matching the stressful state includes multiple information.

5. The method of claim 4, wherein in the controlling, the vehicle driving or the driving path of the vehicle, each of which matches each piece of information in the multiple information, is controlled in the direction of alleviating the stressful state of the occupant.

6. The method of claim 4, wherein in the controlling, the vehicle driving or the driving path of the vehicle, each of which matches one piece of information selected from the multiple information, in a weighted manner, in the direction of alleviating the stressful state of the occupant.

7. The method of claim 1, wherein the training of the vehicle driving model comprises:
training the driving model in a manner that varies according to an attribute of the recognized information on the basis of the result of the control.

8. The method of claim 1, wherein the training of the vehicle driving model comprises:
generating first driving information, which is based on the recognized information, using a pre-trained driving model, generating second driving information related to the first driving information on the basis of the emotional state of the occupant regarding the first driving information, and training the driving mode on the basis of the second driving information.

9. The method of claim 1, wherein the monitoring comprises:
recognizing the presence of a different vehicle that travels in parallel with a travel lane of the vehicle and identifying a stressful emotional state of the occupant regarding the recognized information, and
wherein the controlling comprises:
adjusting an offset to a travel road of the vehicle in the direction of moving away from the different vehicle while the different vehicle drives in parallel; and
controlling the vehicle to drive by reverting the offset to the travel road of the vehicle to a previous state when it is recognized that the different vehicle no longer drives in parallel.

10. The method of claim 1, wherein the monitoring comprises:
recognizing that the vehicle drives in a section that satisfies a first condition, and identifying a stressful emotional state of the occupant regarding the recognized information, and
wherein the controlling comprises:
changing a driving path of the vehicle in such a manner that the vehicle drives to avoid the section that satisfies the first condition, or additionally adjusting at least one of the following: a travel distance or a travel speed, while the vehicle travels in the section that satisfies the first condition.

11. The method of claim 1, wherein the monitoring comprises:
identifying a stressful emotional state of the occupant while the vehicle drives along a steep road, and
wherein the controlling comprises:
additionally decreasing a travel speed of the vehicle to correspond to the degree of the stressful emotion of the occupant.

12. The method of claim 1, wherein the monitoring comprises:
monitoring a stressful emotion of the occupant regarding an overtaking vehicle in front of the vehicle, and
wherein the controlling comprises:
controlling the vehicle to drive by resetting a distance between the vehicle and a preceding vehicle to be shorter in such a manner as to reflect the stressful emotion of the occupant.

13. A personal driving system for a vehicle, the personal driving system comprising:
an interface unit that receives sensing data obtained by a vehicle sensor and information related to an external map while the vehicle drives;
a recognition unit that recognizes information regarding an object in the vicinity of the vehicle and a driving situation on the basis of the received sensing data and external-map-related information;
a determination unit that monitors a gaze direction and an emotional state of an occupant regarding the recognized information and vehicle driving and determines whether to change at least one of the following: the vehicle driving or a driving path of the vehicle, based on the result of the monitoring in such a manner as to reflect the emotional state of the occupant; and
a control unit that controls at least one of the following: the vehicle driving or the driving path of the vehicle, according to the determination, and controls a vehicle driving model in such a manner that a vehicle driving model is trained based on the result of the control, the result reflecting the emotional state of the occupant.

14. The personal driving system of claim 13, wherein the control unit controls the driving model in such a manner that the vehicle driving model is trained in a manner of varying according to an attribute of the recognized information on the basis of the result of the control.

15. The personal driving system of claim 13, wherein the control unit performs control in such a manner as to
generate first driving information, which is based on the recognized information, using a pre-trained driving model,
generate second driving information related to the first driving information on the basis of the emotional state of the occupant regarding the first driving information, and
train the vehicle driving model on the basis of the second driving information.

16. A computer program recorded on a recording medium, the computer program installed on a computer apparatus, configured to include a memory, a transceiver, and a processor processing a command stored in the memory, causing the processor to
recognize information regarding an object in the vicinity of the vehicle and a driving situation on the basis of information obtained by a sensor of the vehicle and information related to an external map while the vehicle drives;
monitor a gaze direction and an emotional state of an occupant regarding the recognized information and vehicle driving;
control at least one of the following: vehicle driving or a driving path of the vehicle, in such a manner as to reflect the emotional state of the occupant based on the result of the monitoring; and
train a driving model based on the result of the control reflecting the emotional state of the occupant.
